# EUROPEAN PATENT APPLICATION

(11) **EP 4 848 628 A1**
(43) Date of publication of application: **02.12.2026**
(21) Application number: 25751138.6
(22) Date of filing: 20.01.2025
(51) Int. Cl.: H04L 1/00

(54) **ENCODING METHOD AND APPARATUS, DECODING METHOD AND APPARATUS, AND SYSTEM**

(30) Priority: 08.02.2024 CN 202410179140
(71) Applicant: Huawei Technologies Co., Ltd., Shenzhen, Guangdong 518129 (CN)
(72) Inventor: ZHANG, Tingting, Shenzhen, Guangdong 518129 (CN); PAN, Dongcheng, Shenzhen, Guangdong 518129 (CN); ZHUANG, Yan, Shenzhen, Guangdong 518129 (CN); WANG, Renlei, Shenzhen, Guangdong 518129 (CN)
(74) Representative: Huawei European IPR
(86) International application number: PCT/CN2025/073183
(87) International publication number: WO 2025/167536

(57) **Abstract**

This application provides an encoding method, a decoding method, an apparatus, and a system. In the method, a strategy for performing code block encoding on a training frame is defined, so that content obtained by performing code block encoding on the training frame includes a control code block, the control code block can be used to determine a boundary code block between a corresponding code block set obtained by performing code block encoding on a subframe included in the training frame and an adjacent code block set, and the boundary code block corresponds to a boundary between the subframe in the training frame and an adjacent subframe. Therefore, in a decoding process, the boundary of the subframe in an obtained training sequence can be determined based on the control code block.

## Description

This application claims priority to Chinese Patent Application No. 202410179140.3, filed with the China National Intellectual Property Administration on February 8, 2024 and entitled "ENCODING METHOD, DECODING METHOD, APPARATUS, AND SYSTEM", which is incorporated herein by reference in its entirety.

### TECHNICAL FIELD

This application relates to the field of communication technologies, and in particular, to an encoding method, a decoding method, an apparatus, and a system.

### BACKGROUND

To meet industrial scenario requirements, forward error correction (forward error correction, FEC) needs to be introduced into a physical coding sublayer (Physical Coding Sublayer, PCS) of devices to ensure reliable signal transmission between the devices. However, when FEC is introduced into the PCS, to meet a requirement of intrinsic safety, before pulse amplitude modulation (pulse amplitude modulation, PAM) symbol mapping is implemented, code block encoding used to control disparity (disparity, which may also be referred to as imbalance) (briefly referred to as code block encoding below) is performed on a training frame. Currently, after code block encoding is performed on the training frame, boundary characteristics of a subframe included in the training frame are obscured, and a boundary of the subframe included in the training frame cannot be quickly identified based on content obtained through code block encoding.

### SUMMARY

Based on this, this application provides an encoding method, a decoding method, an apparatus, and a system, to accurately identify, when code block encoding is performed on a training frame, a boundary of a subframe included in the training frame.

According to a first aspect, this application provides an encoding method. The encoding method may be applied to a first physical layer (Physical, PHY). For example, the method may include: The first PHY obtains a training frame including a plurality of subframes, and performs code block encoding on a first subframe in the plurality of subframes to obtain a first code block set, where the first code block set includes a first control code block, and the first control code block is used to determine a boundary code block between the first code block set and an adjacent code block set. In this way, a strategy for performing code block encoding on a training frame is defined, so that content obtained by performing code block encoding on the training frame includes a control code block, the control code block can be used to determine a boundary code block between a corresponding code block set obtained by performing code block encoding on a subframe included in the training frame and an adjacent code block set, and the boundary code block corresponds to a boundary between the subframe in the training frame and an adjacent subframe. Therefore, in a process of performing code block decoding on a training sequence including the training frame, the boundary of the subframe in the obtained training sequence can be quickly and accurately determined based on the control code block, to prepare for fast and accurate implementation of scrambling synchronization, training frame delimitation, or FEC delimitation.

In an example, the first control code block may also be referred to as a synchronization K code. For example, the first control code block may include but is not limited to any one of K28.1, K28.5, or K28.7 in 8B/10B special code groups (special code groups). Because only K28.1, K28.5, or K28.7 includes unique b'0011111' (comma+) or b'1100000' (comma-), any one of K28.1, K28.5, or K28.7 may be used as the first control code block and included in the first code block set. In this way, the first control code block in the first code block set can be quickly identified by searching for a comma in the first code block set, and therefore the boundary code block between the first code block set and the adjacent code block set is determined based on the first control code block.

It should be noted that, in this application, 8B/10B encoding is used as an example, and Kx.y represents a 10-bit code group generated from a pre-encoding value x.y according to an encoding rule for control variables. Specifically, K represents an encoding rule for control code groups, and x and y respectively represent decimal values of bits EDCBA and bits HGF in eight bit positions HGFEDCBA before 8B/10B encoding. For example, 28.1 indicates that a pre-encoding value corresponding to the eight bit positions HGFEDCBA is 00111100.

In a possible implementation, the plurality of subframes of the training frame may further include a second subframe that carries an information field, and the information field includes configuration information used for a link between the first PHY and a second PHY. The configuration information may include, for example, at least one of the following information: an operating rate, status information, or capability information. The status information may include, for example, a status of a physical medium attachment (Physical medium attachment, PMA) layer or a status of a PCS, and the status of the PCS may include whether PCS scrambling is synchronized. The capability information may include, for example, support for different standard rates such as 10 M and 100 M, and support for modes such as simplex, full-duplex, symmetric, and asymmetric. In addition, the information field may further include a control parameter of the link between the first PHY and the second PHY. The control parameter may include, for example, a timestamp, a transmit power, an equalizer coefficient, or a signal quality evaluation indicator. For example, the signal quality evaluation indicator may include but is not limited to a signal-to-noise ratio (Signal-to-Noise Ratio, SNR), an SNR margin, or a bit error rate (Bit Error Rate, BER).

In a possible implementation, the method may further include: The first PHY performs code block encoding on the second subframe to obtain a second code block set.

In an example, the second code block set may include a plurality of data code blocks, and does not include a control code block. For example, the first code block set includes one first control code block, and other code blocks are all data code blocks. A quantity of data code blocks in the second code block set may be one more than a quantity of data code blocks in the first code block set, and a quantity of code blocks included in the second code block set may be the same as a quantity of code blocks included in each first code block set.

In another example, the second code block set may include a second control code block. For the first control code block and the second control code block, a pre-encoding value of the second control code block may be the same as a pre-encoding value of the first control code block. For example, both the first control code block and the second control code block are K28.1. Alternatively, a pre-encoding value of the second control code block may be different from a pre-encoding value of the first control code block. For example, the first control code block is K28.1, and the second control code block may be K28.5 or K28.7. A quantity of second control code blocks may be the same as a quantity of first control code blocks. For example, each first code block set includes one first control code block, and the second code block set also includes one second control code block. Alternatively, a quantity of second control code blocks may be different from a quantity of first control code blocks. For example, each first code block set includes one first control code block, and the second code block set includes two second control code blocks. Positions of the second control code block and the first control code block in corresponding code block sets may be the same. For example, the first control code block is a start code block of each first code block set, and the second control code block is a start code block of the second code block set. Alternatively, positions of the second control code block and the first control code block in corresponding code block sets may be different. For example, the first control code block is a start code block of each first code block set, and the second control code block is an intermediate code block or an end code block of the second code block set.

In a possible implementation, if the first control code block is a start code block or an end code block of the first code block set, the first control code block is the boundary code block.

In another possible implementation, if the first control code block is an intermediate code block of the first code block set, the first PHY may determine the boundary code block based on a position of the first control code block in the first code block set. It may be understood that, if the first control code block in the first code block set is known, and an offset (in terms of a bit or a quantity of code blocks) of the first control code block in the first code block set relative to the boundary code block is known, the first PHY may determine the boundary code block by offsetting the first control code block in the first code block set by the offset of the first control code block relative to the boundary code block.

In a possible implementation, all or a part of first code block sets may further include a third control code block, the third control code block indicates a position, in a plurality of code block sets, of a first code block set in which the third control code block is located, and the plurality of code block sets are obtained by performing code block encoding on one training frame. Different from the first control code block, the third control code block may be any control code block that does not include a comma, and includes but is not limited to K23.7 or K27.7.

In a possible implementation, the method may further include: The first PHY sends, to the second PHY, the plurality of code block sets including the first code block set. In an example, the first PHY may first perform PAM mapping on the plurality of code block sets (including the first code block set) obtained by performing code block encoding on the training frame, to obtain a symbol sequence. Then, the first PHY sends the symbol sequence to the second PHY via a cable, to implement signal transmission between the first PHY and the second PHY.

In a possible implementation, for example, that the first PHY performs code block encoding on the first subframe in the plurality of subframes to obtain the first code block set may include: The first PHY encodes the first subframe in an 8B/10B manner to obtain the first code block set. Encoding in the 8B/10B manner may be understood as encoding every 8-bit data in the first subframe into a 10-bit code block. An encoding manner used in the method provided in this embodiment of this application is not limited to the 8B/10B manner, and may be any other possible manner, for example, may be a 9B/10B manner.

In a possible implementation, the training frame mentioned in this application may be a PMA training frame. In the PMA training frame, an information field is at a position from a bit 0 to a bit 95 of a last subframe of the PMA training frame.

According to a second aspect, this application further provides a decoding method. The method is applied to a second PHY. For example, the method may include: The second PHY obtains a training sequence including a first code block set, where the first code block set includes a first control code block. Then, the second PHY determines a first boundary code block between the first code block set and an adjacent code block set based on the first control code block. Then, the second PHY determines a second boundary between a first subframe and an adjacent subframe based on the first boundary code block. In this way, a code block decoding strategy corresponding to the encoding method provided in embodiments of this application is defined, so that for an obtained training sequence, a boundary code block between a code block set and an adjacent code block set can be quickly and accurately determined based on a control code block included in the code block set in the training sequence, and a boundary between a corresponding subframe obtained by performing code block decoding on the code block set and an adjacent subframe is determined based on the boundary code block. Therefore, the boundary of the subframe in the obtained training sequence is quickly and accurately determined, so that it is possible to quickly and accurately implement scrambling synchronization, training frame delimitation, or FEC delimitation.

In a possible implementation, the method may further include: The second PHY determines a training frame in the obtained training sequence, where the training frame includes the first subframe. The training sequence may further include a second code block set, the second code block set is obtained by performing code block encoding on a second subframe, the second subframe includes an information field, and the information field includes configuration information used for a link between a first PHY and the second PHY.

In an example, the second code block set may include a second control code block, and the method may further include: The second PHY determines a third boundary code block between the second code block set and an adjacent code block set based on the second control code block. The second PHY determines a fourth boundary between the second subframe and an adjacent subframe based on the third boundary code block.

In another example, the second code block set may include a plurality of data code blocks, and the method may further include: The second PHY determines a fourth boundary between the second subframe and an adjacent subframe based on a data code block that is in the second code block set and that corresponds to an occurrence position of the first control code block in the first code block set.

In a possible implementation, when the second PHY determines the fourth boundary, that the second PHY determines the training frame may include: The second PHY decodes the training sequence to obtain a training bit stream. The second PHY determines the training frame in the training bit stream based on the second boundary and the fourth boundary.

In another possible implementation, when any one or more first code block sets further include a third control code block, the third control code block indicates a position, in a plurality of code block sets, of the first code block set including the third control code block, and the plurality of code block sets are obtained by performing code block encoding on one training frame. In this case, that the second PHY determines the training frame may include: The second PHY decodes the training sequence to obtain a training bit stream. The second PHY determines a boundary of the training frame in the training bit stream based on the third control code block and the second boundary, to determine the training frame in the training sequence.

In a possible implementation, that the second PHY determines the second boundary between the first subframe and the adjacent subframe based on the first boundary code block may include: The second PHY generates indication information (indicating a position of the first boundary code block in a code block set) based on the first boundary code block, and decodes the training sequence to obtain a training bit stream, where the training bit stream includes the first subframe. Then, the second PHY determines the second boundary in the training bit stream based on the indication information.

In a possible implementation, code block coding/decoding of the second PHY may be implemented in an 8B/10B manner. A decoding manner used in the method provided in this embodiment of this application is not limited to the 8B/10B manner, and may be any other possible manner, for example, may be a 9B/10B manner.

In a possible implementation, the training frame mentioned in this application may be a PMA training frame. In the PMA training frame, an information field is at a position from a bit 0 to a bit 95 of a last subframe of the PMA training frame.

According to a third aspect, this application further provides an encoding apparatus. The apparatus is applied to a first PHY, and the apparatus may include an obtaining unit and a first encoding unit. The obtaining unit is configured to obtain a training frame, where the training frame includes a plurality of subframes. The first encoding unit is configured to perform code block encoding on a first subframe in the plurality of subframes in the training frame to obtain a first code block set, where the first code block set includes a first control code block, and the first control code block is used to determine a boundary code block between the first code block set and an adjacent code block set.

In a possible implementation, a second subframe in the plurality of subframes includes an information field, and the information field includes configuration information used for a link between the first PHY and a second PHY.

In a possible implementation, the apparatus may further include a second encoding unit. The second encoding unit is configured to perform code block encoding on the second subframe to obtain a second code block set, where the second code block set includes a second control code block.

In an example, a pre-encoding value of the first control code block is the same as a pre-encoding value of the second control code block.

In another example, a pre-encoding value of the first control code block is different from a pre-encoding value of the second control code block.

In still another example, a quantity of first control code blocks is different from a quantity of second control code blocks.

In yet another example, a position of the first control code block in the first code block set is different from a position of the second control code block in the second code block set.

In a possible implementation, the apparatus further includes a third encoding unit. The third encoding unit is configured to perform code block encoding on the second subframe to obtain a second code block set, where the second code block set includes a plurality of data code blocks.

In a possible implementation, the first control code block is a start code block or an end code block of the first code block set, and the first control code block is the boundary code block.

In another possible implementation, the first control code block is an intermediate code block of the first code block set, and the boundary code block is determined based on the position of the first control code block in the first code block set.

In a possible implementation, the first code block set further includes a third control code block, the third control code block indicates a position of the first code block set in a plurality of code block sets, and the plurality of code block sets are obtained by performing code block encoding on the training frame.

In a possible implementation, the apparatus may further include a sending unit. The sending unit is configured to send the first code block set to the second PHY.

In a possible implementation, the first encoding unit is specifically configured to encode the first subframe in an 8B/10B manner to obtain the first code block set.

In a possible implementation, the training frame is a PMA training frame.

It should be noted that, for related descriptions of the encoding apparatus in the third aspect, refer to the corresponding descriptions in the first aspect.

According to a fourth aspect, this application further provides a decoding apparatus. The apparatus is applied to a second PHY. The apparatus may include an obtaining unit, a first determining unit, and a second determining unit. The obtaining unit is configured to obtain a training sequence, where the training sequence includes a first code block set, and the first code block set includes a first control code block. The first determining unit is configured to determine a first boundary code block between the first code block set and an adjacent code block set based on the first control code block. The second determining unit is configured to determine a second boundary between a first subframe and an adjacent subframe based on the first boundary code block.

In a possible implementation, the apparatus may further include a third determining unit. The third determining unit is configured to determine a training frame, where the training frame includes the first subframe.

In a possible implementation, the training sequence further includes a second code block set, the second code block set is obtained by performing code block encoding on a second subframe, the second subframe includes an information field, and the information field includes configuration information used for a link between a first PHY and the second PHY.

In an example, the second code block set includes a second control code block, and the apparatus further includes a fourth determining unit and a fifth determining unit. The fourth determining unit is configured to determine a third boundary code block between the second code block set and an adjacent code block set based on the second control code block. The fifth determining unit is configured to determine a fourth boundary between the second subframe and an adjacent subframe based on the third boundary code block.

In another example, the second code block set includes a plurality of data code blocks, and the apparatus further includes a sixth determining unit. The sixth determining unit is configured to determine a fourth boundary between the second subframe and an adjacent subframe based on a data code block that is in the second code block set and that corresponds to an occurrence position of the first control code block in the first code block set.

In this implementation, the third determining unit is specifically configured to: decode the training sequence to obtain a training bit stream; and determine the training frame in the training bit stream based on the second boundary and the fourth boundary.

In another possible implementation, the first code block set further includes a third control code block, the third control code block indicates a position, in a plurality of code block sets, of the first code block set including the third control code block, and the plurality of code block sets are obtained by performing code block encoding on the training frame. The third determining unit is specifically configured to: decode the training sequence to obtain a training bit stream; and determine a boundary of the training frame in the training bit stream based on the third control code block and the second boundary.

In a possible implementation, the second determining unit is specifically configured to: decode the training sequence based on the first boundary code block to obtain a training bit stream, where the training bit stream includes the first subframe; and determine the second boundary in the training bit stream based on indication information, where the indication information indicates a position of the first boundary code block in a corresponding code block set.

In a possible implementation, decoding is implemented in an 8B/10B manner.

It should be noted that, for related descriptions of the decoding apparatus in the fourth aspect, refer to the corresponding descriptions in the second aspect.

According to a fifth aspect, this application provides a communication apparatus. The communication apparatus may include a first PHY and/or a second PHY.

The first PHY is configured to perform the method provided in any one of the first aspect or the possible implementations of the first aspect.

The second PHY is configured to perform the method provided in any one of the second aspect or the possible implementations of the second aspect.

According to a sixth aspect, this application provides a communication apparatus. The communication apparatus includes a memory and a processor.

The memory is configured to store instructions.

The processor is configured to execute the instructions in the memory, to perform the method provided in any one of the first aspect, the possible implementations of the first aspect, the second aspect, or the possible implementations of the second aspect.

According to a seventh aspect, this application provides a communication system. The communication system may include a first communication apparatus and a second communication apparatus, the first communication apparatus includes a first PHY, and the second communication apparatus includes a second PHY.

The first PHY is configured to perform the method provided in any one of the first aspect or the possible implementations of the first aspect.

The second PHY is configured to perform the method provided in any one of the second aspect or the possible implementations of the second aspect.

According to an eighth aspect, this application further provides a storage medium. The storage medium includes instructions, and when the instructions are run on a processor, the processor is enabled to perform the method provided in any one of the first aspect, the possible implementations of the first aspect, the second aspect, or the possible implementations of the second aspect.

According to a ninth aspect, this application further provides a program product. The program product includes a program, and when the program is run on a processor, the method provided in any one of the first aspect, the possible implementations of the first aspect, the second aspect, or the possible implementations of the second aspect is performed.

According to a tenth aspect, this application further provides a PHY chip. The PHY chip includes a processor and an interface circuit, the interface circuit is configured to receive instructions and transmit the instructions to the processor, and the processor is configured to perform the method provided in any one of the first aspect, the possible implementations of the first aspect, the second aspect, or the possible implementations of the second aspect.

### BRIEF DESCRIPTION OF DRAWINGS

FIG. 1 is a diagram of a possible format of a training frame according to an embodiment of this application;
FIG. 2 is a diagram of performing code block encoding on the training frame shown in FIG. 1 according to an embodiment of this application;
FIG. 3a(1) and FIG. 3a(2) are a diagram of a scenario, in which a switch 1 and a switch 2 are interconnected via a cable, to which an embodiment of this application is applicable;
FIG. 3b(1) and FIG. 3b(2) are a diagram of a scenario, in which a switch 1 and a terminal device 2 are interconnected via a cable, to which an embodiment of this application is applicable;
FIG. 3c(1) and FIG. 3c(2) are a diagram of a scenario, in which a switch 3 and a switch 4 are interconnected via a cable, to which an embodiment of this application is applicable;
FIG. 3d(1) and FIG. 3d(2) are a diagram of a scenario, in which a switch 3 and a terminal device 4 are interconnected via a cable, to which an embodiment of this application is applicable;
FIG. 4 is a schematic flowchart of an encoding method 100 according to an embodiment of this application;
FIG. 5 is a diagram of a plurality of code block sets obtained by performing code block encoding on a training frame according to an embodiment of this application;
FIG. 6 is another diagram of a plurality of code block sets obtained by performing code block encoding on a training frame according to an embodiment of this application;
FIG. 7 is still another diagram of a plurality of code block sets obtained by performing code block encoding on a training frame according to an embodiment of this application;
FIG. 8 is yet another diagram of a plurality of code block sets obtained by performing code block encoding on a training frame according to an embodiment of this application;
FIG. 9 is still yet another diagram of a plurality of code block sets obtained by performing code block encoding on a training frame according to an embodiment of this application;
FIG. 10 is a schematic flowchart of a decoding method 200 according to an embodiment of this application;
FIG. 11 is a diagram of a possible decoding procedure according to an embodiment of this application;
FIG. 12a is a diagram of another possible decoding procedure according to an embodiment of this application;
FIG. 12b is a diagram of still another possible decoding procedure according to an embodiment of this application;
FIG. 13 is a diagram of a structure of a communication apparatus 1300 according to an embodiment of this application;
FIG. 14 is a diagram of a structure of a communication apparatus 1400 according to an embodiment of this application;
FIG. 15 is a diagram of a structure of a communication apparatus 1500 according to an embodiment of this application; and
FIG. 16 is a diagram of a structure of a communication system 1600 according to an embodiment of this application.

### DESCRIPTION OF EMBODIMENTS

In a data communication scenario, as a rate continues to increase, interference from electrical fast transients (Electrical Fast Transients, EFTs) and ringing signals may affect communication between devices. Therefore, FEC needs to be introduced into the devices to ensure reliability of communication between the devices. For example, FEC may be introduced into PCSs of the devices. In addition, to meet a requirement of intrinsic safety (intrinsic safety), code block encoding that controls disparity needs to be further used before PAM symbol mapping is implemented. However, code block encoding may cause boundary characteristics between subframes included in a training frame to be obscured. Therefore, a boundary between the subframes included in the training frame cannot be quickly and accurately identified from content obtained through code block encoding. However, fast and accurate identification of the boundary between the subframes included in the training frame is very important for scrambling synchronization, training frame delimitation, and FEC delimitation. Intrinsic safety is a protection technology that enables a device to operate safely in an explosive gas environment and an abnormal operation condition. A design manner is to prevent the device from releasing energy sufficient to ignite flammable materials. It may also be understood as meaning that intrinsic safety is to prevent explosion by limiting energy through a safety barrier, or a spark generated by passing energy being insufficient to cause an explosion is considered as meeting the requirement of intrinsic safety.

The training frame is training data constructed by a PHY of a device in a training mode, and is not used to transmit service data. In embodiments of this application, a signal frame on which code block encoding is to be performed in the training mode is referred to as a training frame. In addition to the training mode, the PHY may further include a data mode. In the data mode, service data may be transmitted between PHYs of devices, and the service data may be transmitted between the PHYs of the devices by using a data frame (which may also be referred to as a service frame). The training frame usually includes an information field, and the information field may include configuration information of a link between PHYs of two devices that perform communication. The configuration information may include, for example, at least one of the following information: an operating rate, status information, or capability information. The status information may include, for example, a status of a PMA layer or a status of a PCS, and the status of the PCS may include, for example, whether PCS scrambling is synchronized. The capability information may include, for example, support for different standard rates such as 10 M and 100 M, and support for different operating modes such as simplex, full-duplex, symmetric, and asymmetric. In addition, the information field may further include a control parameter of the link between the PHYs of the two devices that perform communication. The control parameter may include, for example, a timestamp, a transmit power, an equalizer coefficient, or a signal quality evaluation indicator. For example, the signal quality evaluation indicator may include but is not limited to an SNR, an SNR margin, or a BER.

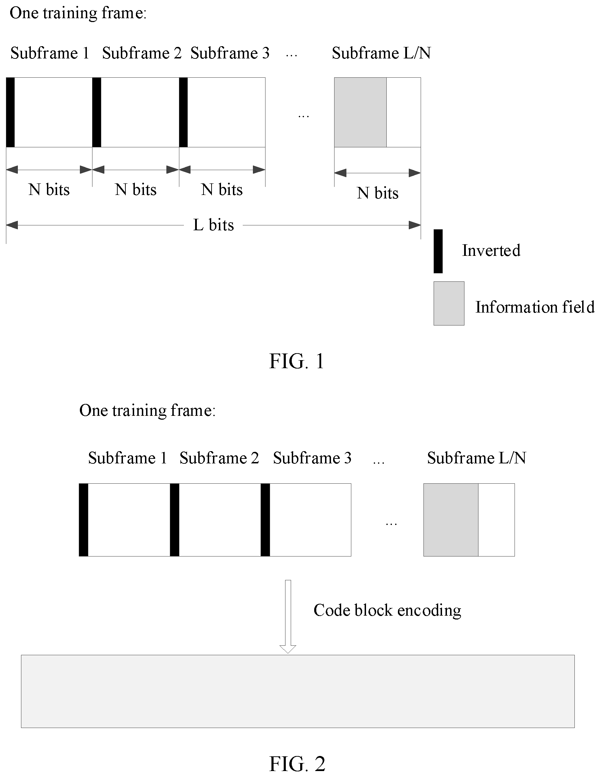

For example, FIG. 1 is a diagram of a possible format of a training frame. For example, the training frame may be obtained by processing, according to a specific rule, a pseudo-random binary sequence (Pseudo-Random Binary Sequence, PRBS) generated by a PCS scrambler. The training frame shown in FIG. 1 may include, for example, L bits. For example, a process of generating the training frame may include: S11: Divide the L-bit PRBS generated by the PCS scrambler into several N-bit subframes, where a length of each subframe in an obtained subframe 1, subframe 2, ... is N bits. S12: Perform exclusive OR with 1 on a 1^{st} bit of a subframe other than a last subframe, which is equivalent to that a 1^{st} bit of each subframe other than the last subframe is inverted. S13: Scramble the first 96 bits of the last subframe with an information field (which may also be referred to as InfoField information). For a relationship between the training frame and the PRBS in this process, refer to the following formula (1). Both L and N are integers greater than 1, and L is an integer multiple of N. It should be noted that an execution sequence of S12 and S13 does not need to be limited. $Training frame = \left\{\begin{matrix}PRBS \left[n\right] ⊕ information field , \left(L-N\right) \leq n \leq \left(L-N+95\right) \\ PRBS \left[n\right] ⊕ 1 , n = \left(k\times N\right) , \left(k=0,1,…,\left(\frac{L}{N}-2\right)\right) \\ PRBS \left[n\right] , n = any other value\end{matrix}\right.$ Formula (1)

For the training frame shown in FIG. 1, for a PHY of a receiver device, in an ideal case (that is, impact of a bit error rate of a link is not considered), if it is determined that, after descrambling, values of at least [(L/N)-1] bits in [(L/N)] bits obtained at intervals of N bits are all 1, it is considered that descrambling synchronization is implemented and subframe delimitation is implemented. Then, first three bytes (that is, 24 bits) of each subframe after descrambling are identified, and whether content of the first three bytes of the subframe is consistent with start frame delimiter (Start Frame Delimiter, SFD) information of the information field is determined. If the content is consistent with the SFD information, it is determined that the subframe is a last subframe of the training frame in which the subframe is located, and therefore a boundary of the training frame is located. In this way, boundary alignment of the training frame is implemented.

FIG. 2 is a diagram of performing conventional code block encoding on the training frame shown in FIG. 1. Before PAM symbol mapping is performed, code block encoding is performed on the training frame, to meet a requirement of intrinsic safety in an industrial scenario. However, as shown in FIG. 2, in content obtained through code block encoding, a boundary characteristic of each subframe in the training frame cannot be reflected. Consequently, a boundary of each subframe in the training frame cannot be quickly determined based on the content obtained through code block encoding, and therefore scrambling synchronization, training frame delimitation, and FEC delimitation cannot be quickly and accurately implemented.

It may be understood that, during communication between devices, usually, training needs to be first completed in a training mode, and then a data mode is entered to carry real service data. The training mode has many functions for entering the data mode. For example, a length of the training frame is an integer multiple of an FEC codeword. Therefore, in the training mode, a boundary of the training frame is determined, to ensure that a boundary of the FEC codeword can be accurately identified after the data mode is entered. For example, in the 1000BASE-T1 scenario, the data mode uses RS(450, 406, 22, 9), and a length of a corresponding FEC codeword is 450×9=4050 bits. However, considering that the data mode uses 3B2T 3-level pulse amplitude modulation (3-Level Pulse Amplitude Modulation, PAM3), which converts three bits into two symbols, and the training mode uses 2-level pulse amplitude modulation (2-Level Pulse Amplitude Modulation, PAM2), which converts two bits into two symbols, due to a difference in coding efficiency between the two modes, a training frame with 4050/3×2=2700 bits is used. For another example, in the training mode, the information field in the training frame is extracted, and based on related information in the information field, PHYs of two devices that perform communication can be quickly and stably switched to the data mode, that is, fast and accurate identification of the subframe boundary in the signal frame is a basis for performing scrambling synchronization and FEC boundary identification, and therefore is a necessary condition for ensuring smooth transition from the training mode to the data mode. It can be learned that the training mode is a very critical stage for a single-pair full-duplex PHY; and the boundary of the subframe in the training frame can be quickly and accurately identified in the training mode, so that the training mode is also a basis for quickly and accurately implementing subsequent operations such as scrambling synchronization, training frame delimitation, and FEC delimitation.

Based on this, embodiments of this application provide an encoding method and a decoding method. A strategy for performing code block encoding on a training frame is defined, so that content obtained by performing code block encoding on the training frame includes a control code block, the control code block can be used to determine a boundary code block between a corresponding code block set obtained by performing code block encoding on a subframe included in the training frame and an adjacent code block set, and the boundary code block corresponds to a boundary between the subframe in the training frame and an adjacent subframe. Therefore, in a decoding process, the boundary of the subframe in an obtained training sequence can be determined based on the control code block.

In a possible implementation, an embodiment of this application provides an encoding method. For example, the method may include: A first PHY obtains a training frame including a plurality of subframes, and performs code block encoding on a first subframe in the plurality of subframes to obtain a first code block set, where the first code block set includes a first control code block, and the first control code block is used to determine a boundary code block between the first code block set and an adjacent code block set. In this way, according to a strategy for performing code block encoding on a training frame that is defined in this embodiment of this application, a code block set obtained by performing code block encoding on a subframe in the training frame includes a control code block, and the control code block is used to determine a boundary code block between the code block set and an adjacent code block set. Therefore, in a process of performing code block decoding on a training sequence including the training frame, a boundary of the subframe in the obtained training sequence can be quickly and accurately determined based on the control code block, to prepare for fast and accurate implementation of scrambling synchronization, training frame delimitation, or FEC delimitation.

In another possible implementation, an embodiment of this application further provides a decoding method. For example, the method may include: A second PHY obtains a training sequence, where the training sequence includes a first code block set, and the first code block set includes a first control code block. Then, the second PHY determines a first boundary code block between the first code block set and an adjacent code block set based on the first control code block. Then, the second PHY determines a second boundary between a first subframe and an adjacent subframe based on the first boundary code block. In this way, a code block decoding strategy corresponding to the encoding method provided in embodiments of this application is defined, so that in a process of performing code block decoding on an obtained training sequence, a boundary code block between a code block set and an adjacent code block set can be quickly and accurately determined based on a control code block included in the code block set in the training sequence, and a boundary between a corresponding subframe obtained by performing code block decoding on the code block set and an adjacent subframe is determined based on the boundary code block. Therefore, the boundary of the subframe in the obtained training sequence is quickly and accurately determined, so that it is possible to quickly and accurately implement scrambling synchronization, training frame delimitation, or FEC delimitation.

In embodiments of this application, a device (which may also be referred to as a communication apparatus) in which a PHY is located may be a network device or a terminal device. The network device may be, for example, a device such as a switch, a router, or a firewall. The terminal device may be, for example, a terminal-side device such as a user host or a vehicle-mounted host.

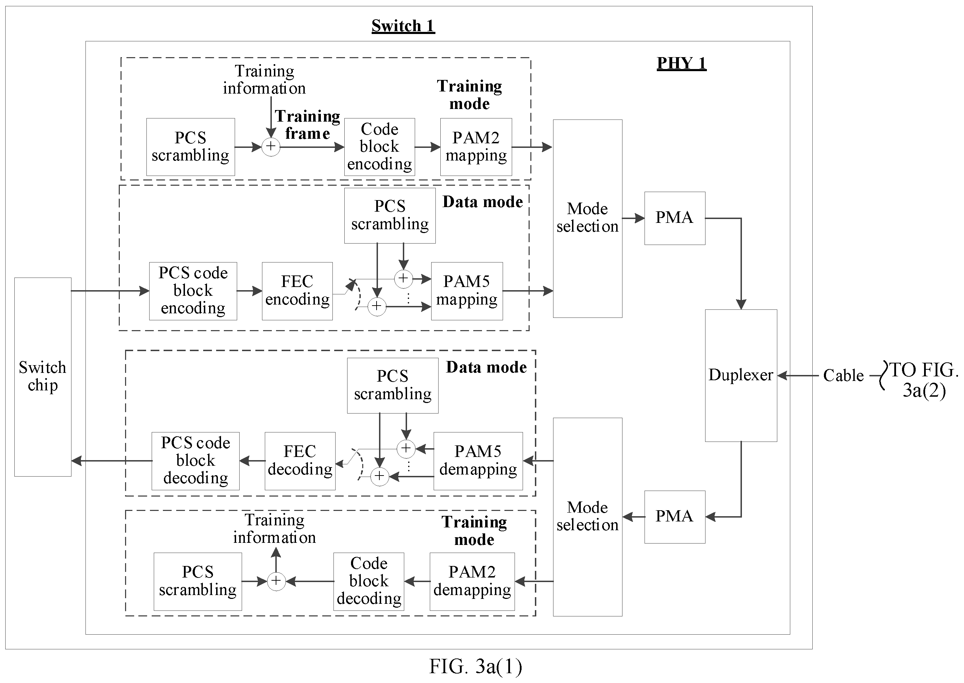

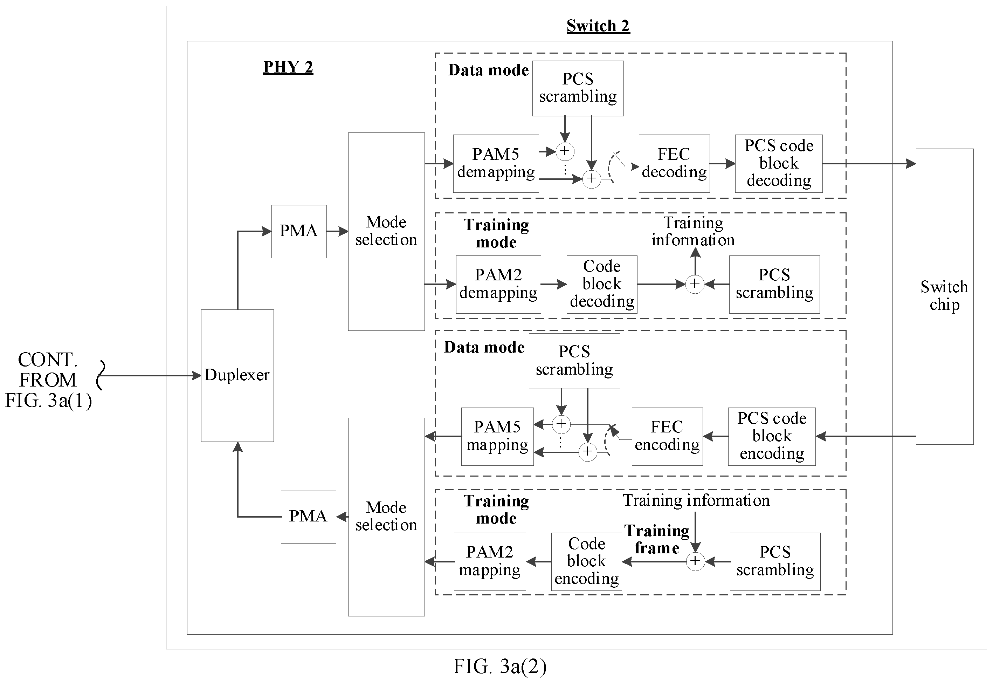

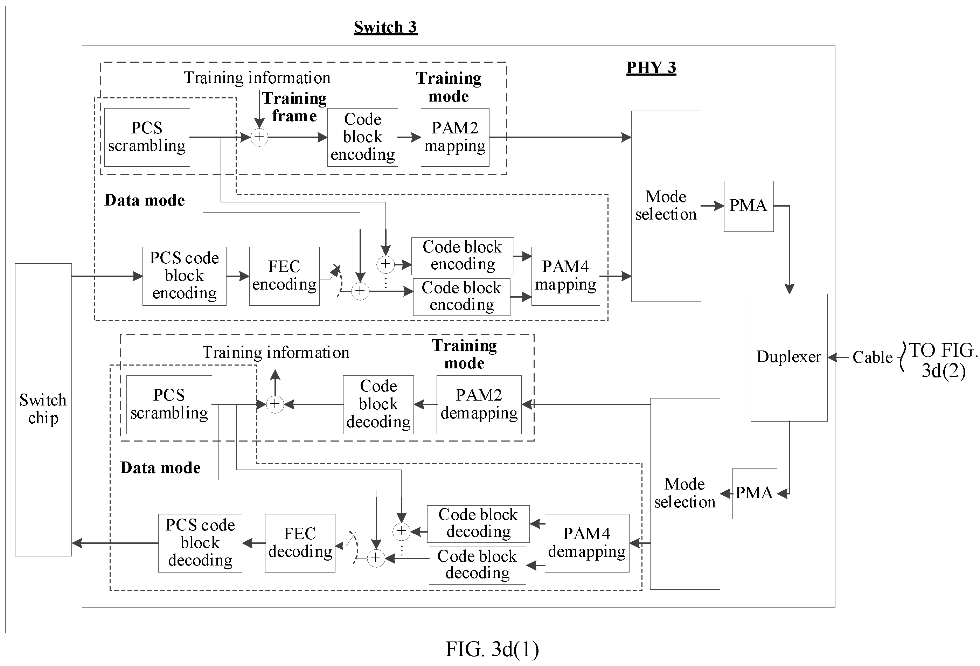

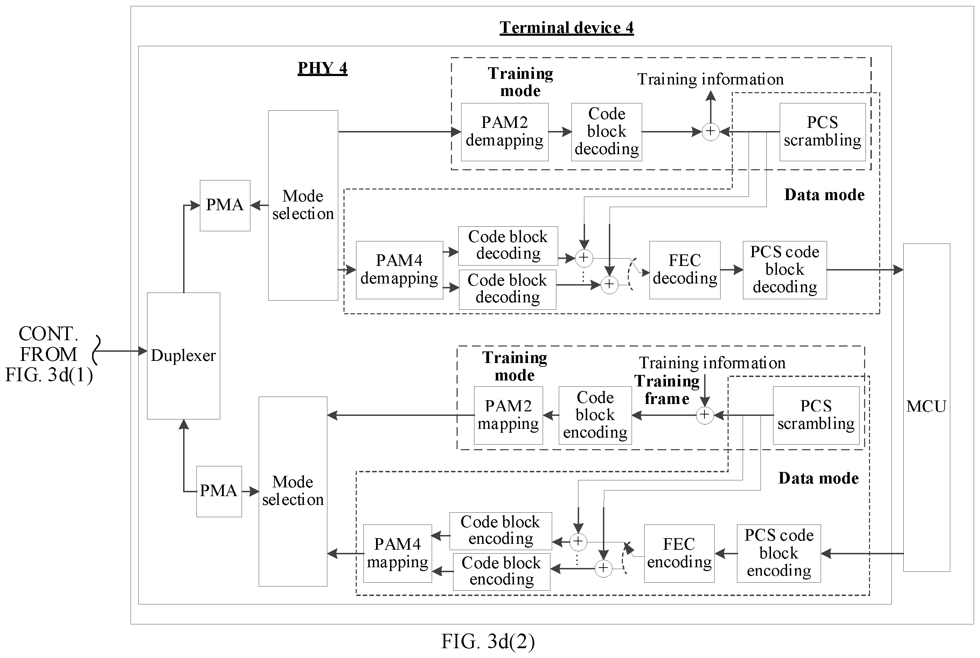

In embodiments of this application, the first PHY and the second PHY may belong to a same device. The device has an encoding function and a decoding function provided in embodiments of this application, and can implement the following method 100 for a training frame on which code block encoding is to be performed, and implement the following method 200 for a training sequence on which code block decoding is to be performed. Alternatively, from a perspective of interaction, it may be considered that the first PHY and the second PHY respectively belong to two devices, and the two devices may be two interconnected network devices, or may be one network device and one terminal device that are interconnected. FIG. 3a(1) and FIG. 3a(2) to FIG. 3d(1) and FIG. 3d(2) are diagrams of four possible applicable scenarios according to embodiments of this application.

FIG. 3a(1) and FIG. 3a(2) are a diagram of a scenario in which a switch 1 and a switch 2 are interconnected via a cable. Internal structures of the switch 1 and the switch 2 are similar. The internal structure of the switch is described by using the switch 1 as an example. The switch 1 may include a switch chip and a PHY 1. Functional modules separately related to a training mode and a data mode in the PHY 1 when the switch 1 is used as a sender or a receiver are shown in the PHY 1. When the PHY 1 is used as a sender, in the training mode, at least functional modules that implement functions corresponding to PCS scrambling, code block encoding, and PAM2 mapping may be included; and in the data mode, processing performed on service data sent by the switch chip may include at least PCS code block encoding, FEC encoding, PCS scrambling, and PAM5 mapping. In either the data mode or the training mode, after mode selection and PMA are performed on a symbol sequence obtained through symbol mapping, the symbol sequence is connected to the switch 2 via one twisted pair. When the PHY 1 is used as a receiver, in the training mode, at least functional modules that implement functions corresponding to PAM2 demapping, code block decoding, and PCS scrambling may be included; and in the data mode, processing performed on service data may include at least PAM5 demapping, PCS scrambling, FEC decoding, and PCS code block decoding, and the service data reaches the switch chip. In either the data mode or the training mode, symbol demapping is performed on a received symbol sequence after PMA and mode selection.

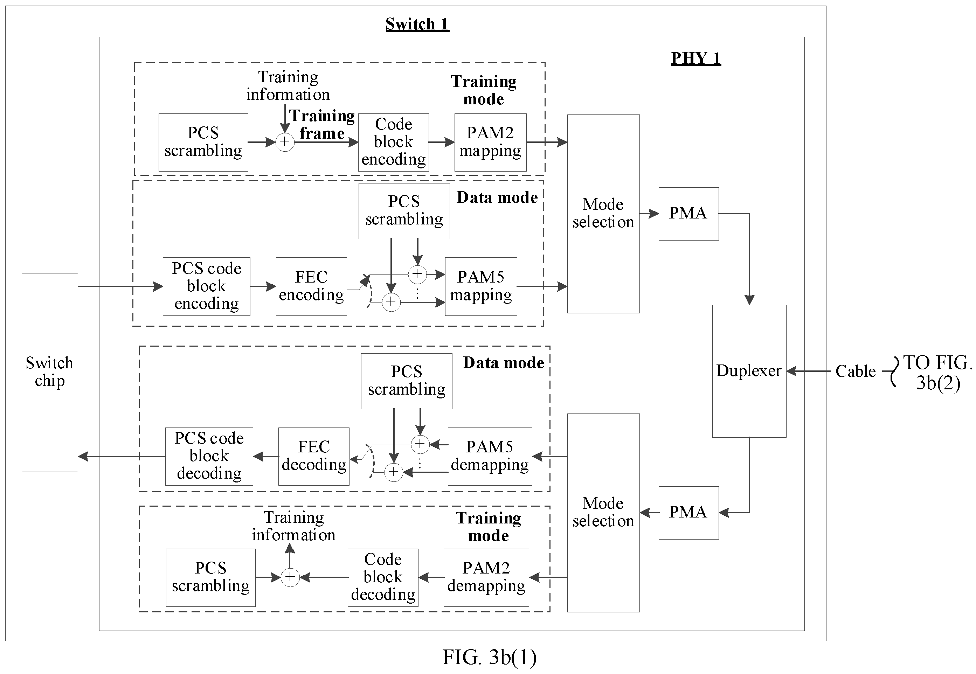

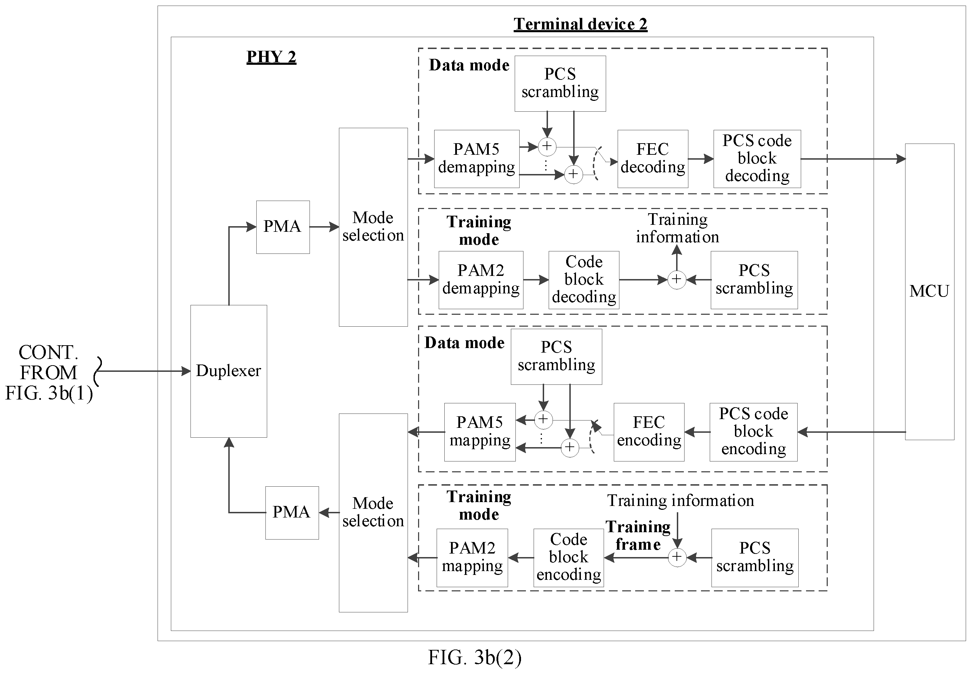

FIG. 3b(1) and FIG. 3b(2) are a diagram of a scenario in which a switch 1 and a terminal device 2 are interconnected via a cable. The terminal device 2 may include a microcontroller unit (Microcontroller Unit, MCU) and a PHY 2. An internal structure of the PHY 2 is similar to an internal structure of a PHY 1 in the switch 1. For details, refer to the foregoing descriptions of the PHY 1 in the switch 1 in FIG. 3a(1) and FIG. 3a(2).

It should be noted that, in FIG. 3a(1) and FIG. 3a(2) and in FIG. 3b(1) and FIG. 3b(2), only PAM5 mapping and PAM5 demapping are used as an example. In an actual scenario, PAM orders used for symbol mapping and symbol demapping may be flexibly set based on a requirement. When the PAM order is not an integer power of 2, for example, the PAM order is 5 or 3, the PHY needs to use one PCS scrambler in the training mode and one PCS scrambler in the data mode to perform PCS scrambling.

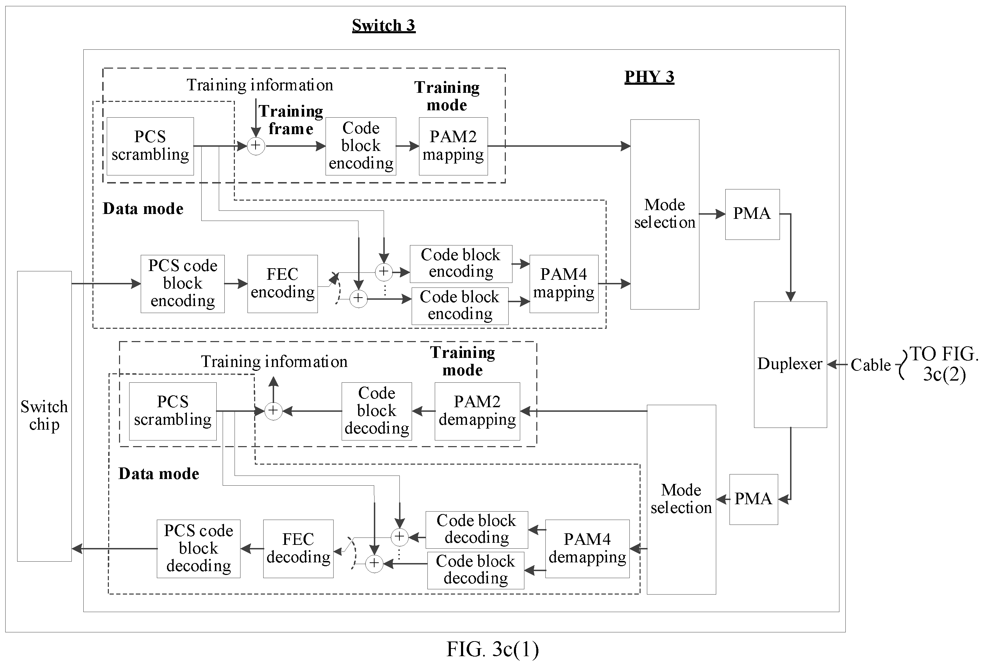

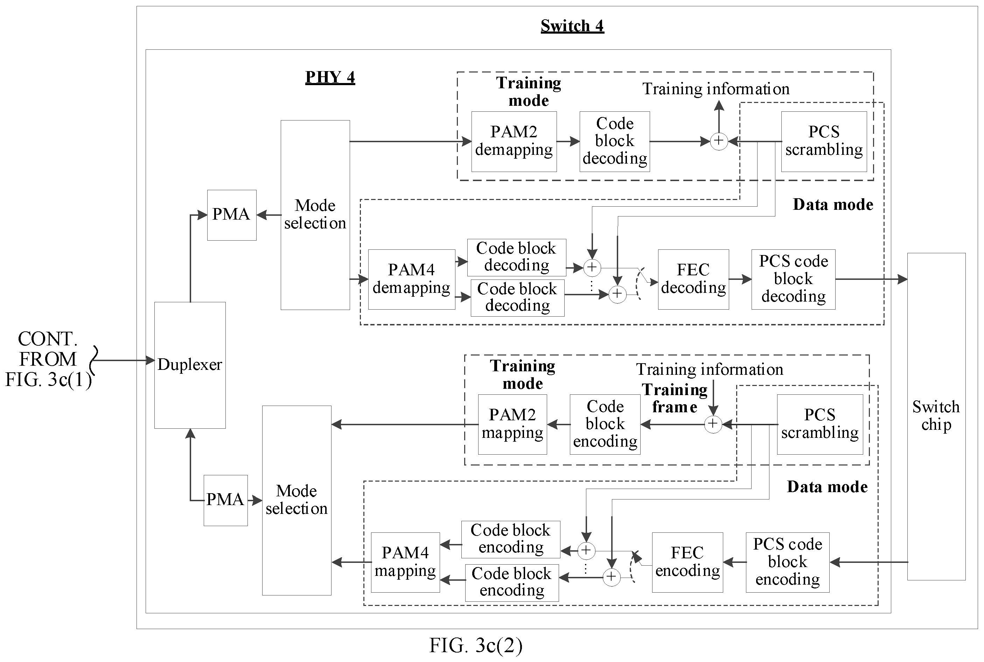

FIG. 3c(1) and FIG. 3c(2) are a diagram of a scenario in which a switch 3 and a switch 4 are interconnected via a cable. Internal structures of the switch 3 and the switch 4 are similar. The internal structure of the switch is described by using the switch 3 as an example. The switch 3 may include a switch chip and a PHY 3. Functional modules separately related to a training mode and a data mode in the PHY 3 when the switch 3 is used as a sender or a receiver are shown in the PHY 3. When the PHY 3 is used as a sender, in the training mode, at least functional modules that implement functions corresponding to PCS scrambling, code block encoding, and PAM2 mapping may be included; and in the data mode, processing performed on service data sent by the switch chip may include at least PCS code block encoding, FEC encoding, PCS scrambling, code block encoding, and PAM4 mapping. In either the data mode or the training mode, after mode selection and PMA are performed on a symbol sequence obtained through symbol mapping, the symbol sequence enters the switch 4 via a cable of a duplexer. When the PHY 3 is used as a receiver, in the training mode, at least functional modules that implement functions corresponding to PAM2 demapping, code block decoding, and PCS scrambling may be included; and in the data mode, processing performed on service data may include at least PAM4 demapping, code block decoding, PCS scrambling, FEC decoding, and PCS code block decoding, and the service data reaches the switch chip. In either the data mode or the training mode, symbol demapping is performed on a received symbol sequence after PMA and mode selection. Compared with FIG. 3a(1) and FIG. 3a(2), differences are as follows: (1) Functional modules for code block encoding and code block decoding are added to the PHY 3 in the data mode. (2) PAM4 mapping and PAM4 demapping are used for symbol processing. (3) A same PCS scrambler is used for scrambling in the data mode and the training mode.

FIG. 3d(1) and FIG. 3d(2) are a diagram of a scenario in which a switch 3 and a terminal device 4 are interconnected via a cable. The terminal device 4 may include an MCU and a PHY 4. An internal structure of the PHY 4 is similar to an internal structure of a PHY 3 in the switch 3. For details, refer to the foregoing descriptions of the PHY 3 in the switch 3 in FIG. 3c(1) and FIG. 3c(2).

It should be noted that, in FIG. 3a(1) and FIG. 3a(2) and in FIG. 3b(1) and FIG. b(2), PAM5 mapping and PAM5 demapping are used as an example; and in FIG. 3c(1) and FIG. 3c(2) and in FIG. 3d(1) and FIG. 3d(2), PAM4 mapping and PAM4 demapping are used as an example. In an actual scenario, PAM orders used for symbol mapping and symbol demapping may be flexibly set based on a requirement. When the PAM order is not an integer power of 2, for example, the PAM order is 5, the PHY needs to use one PCS scrambler in the training mode and one PCS scrambler in the data mode to perform PCS scrambling. When the PAM order is an integer power of 2, for example, the PAM order is 4, the PHY may use one PCS scrambler in the training mode and the data mode to perform PCS scrambling.

It should be noted that, in the training mode, when the PHY 1 (or the PHY 3) is used as a sender, a training frame is content obtained by processing a PRBS generated through PCS scrambling and training information. The training information may include a rule used to generate the training frame based on the PRBS. For example, refer to the formula (1) or S11 to S13. In the training mode, when the PHY 1 (or the PHY 3) is used as a receiver, content obtained through code block decoding and a PRBS generated through PCS scrambling are processed to obtain training information. The training information may be the same as or different from the training information used when the PHY 1 (or the PHY 3) is used as a sender.

To describe embodiments of this application more clearly, the following describes the methods provided in embodiments of this application with reference to the accompanying drawings.

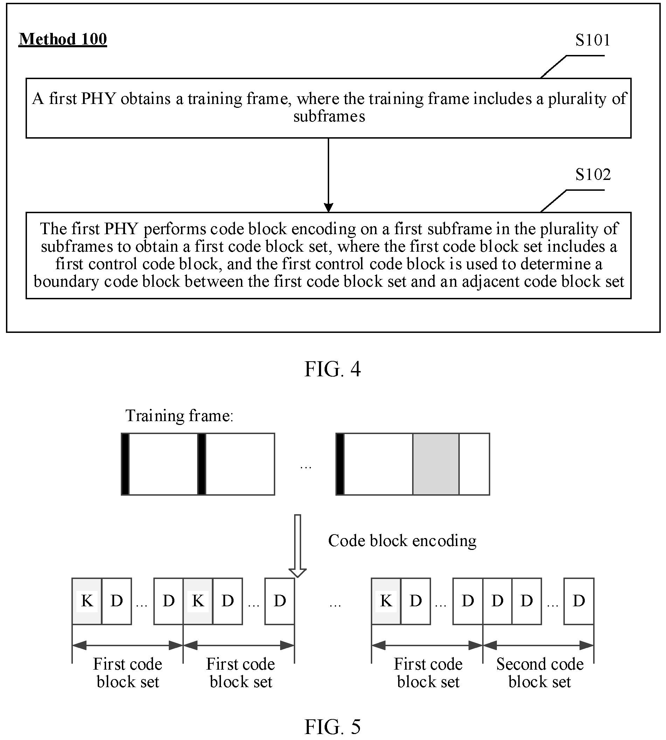

FIG. 4 is a schematic flowchart of an encoding method 100 according to an embodiment of this application. In the method 100, this embodiment of this application is described by using a first PHY as an execution body. For example, the first PHY may be any PHY in the scenarios shown in FIG. 3a(1) and FIG. 3a(2) to FIG. 3d(1) and FIG. 3d(2). For example, the first PHY corresponds to the PHY 1 in FIG. 3a(1) and FIG. a(2) or FIG. 3b(1) and FIG. 3b(2). In this case, the method 100 may be understood as being implemented by the PHY 1, or may be understood as being implemented by the switch 1 including the PHY 1. For another example, the first PHY corresponds to the PHY 2 in FIG. 3b(1) and FIG. 3b(2). In this case, the method 100 may be understood as being implemented by the PHY 2, or may be understood as being implemented by the terminal device 2 including the PHY 2.

As shown in FIG. 4, the method 100 may include, for example, the following S101 and S102:

S101: Obtain a training frame, where the training frame includes a plurality of subframes.

If the first PHY is a sender in a training mode, the first PHY may implement the method 100. In an example, the first PHY may include a functional module for implementing code block encoding, and the functional module may implement the method 100. For example, S101 may be: The functional module for implementing code block encoding obtains a training frame obtained by processing a PRBS generated by a PCS scrambler.

The training frame may be understood as training data constructed by the first PHY in the training mode, and is not used to transmit service data. In embodiments of this application, a signal frame on which code block encoding is to be performed in the training mode is referred to as a training frame. The training frame includes the plurality of subframes, and lengths of the subframes are usually the same. The training frame may include an information field, and the information field may be located in any one or more subframes of the training frame. The following uses an example in which the information field is located in a last subframe of the training frame for description.

The information field may include configuration information of a link between PHYs of two devices that perform communication. In this embodiment of this application, the information field may include configuration information of a link between the first PHY and a second PHY. The configuration information may include, for example, at least one of the following information: an operating rate, status information, or capability information. In addition, the information field may further include a control parameter, and the control parameter may include, for example, a timestamp, a transmit power, an equalizer coefficient, or a signal quality evaluation indicator.

In an example, the training frame may be a PMA training frame. For a structure of the PMA training frame, refer to FIG. 1. In the PMA training frame, an information field is at a position from a bit 0 to a bit 95 of a last subframe of the PMA training frame.

Alternatively, the training frame may be a training frame of another type. For example, the information field may be at an intermediate position or an end position of the last subframe of the training frame. For another example, a subframe in which the information field is located may be an intermediate subframe of the training frame. For still another example, a subframe in which the information field is located may be a 1^{st} subframe of the training frame.

An example in which the subframe in which the information field is located is the last subframe of the training frame is used below for description.

S102: Perform code block encoding on a first subframe in the plurality of subframes to obtain a first code block set, where the first code block set includes a first control code block, and the first control code block is used to determine a boundary code block between the first code block set and an adjacent code block set.

It should be noted that code block encoding on the training frame may be regarded as performing code block encoding on each of the plurality of subframes included in the training frame. The first subframe may be any subframe in the training frame. For example, the first subframe may be a subframe that includes the information field in the training frame. For another example, the first subframe may be any one of subframes that do not include the information field in the training frame. In this case, when code block encoding is performed on each subframe in the training frame, the subframe may be regarded as the first subframe, and S102 may be performed accordingly.

Code block encoding may be understood as a process of encoding data in each subframe into a code block set corresponding to the data. A subframe before code block encoding is in one-to-one correspondence with a code block set obtained through code block encoding. During code block encoding, encoding of each subframe may be understood as encoding each piece of data of a first length in the subframe into a code block of a second length, and a quantity of pieces of data of the first length in each subframe is the same as a quantity of code blocks included in a code block set corresponding to the subframe.

For example, in S102, code block encoding may be performed on the first subframe in an 8B/10B manner, to obtain the first code block set. The first length corresponds to eight bits, and the second length corresponds to 10 bits. In this way, in a process of performing code block encoding on the first subframe, data of every eight bits in the first subframe is encoded into one 10-bit code block, to obtain a plurality of 10-bit code blocks, and the plurality of 10-bit code blocks all belong to the first code block set.

To achieve the objective of embodiments of this application, in an encoding strategy designed in this embodiment of this application, the generated first code block set includes the first control code block used to determine the boundary code block between the first code block set and the adjacent code block set.

The first control code block may also be referred to as a synchronization K code. For example, the first control code block may include but is not limited to any one of K28.1, K28.5, or K28.7 in 8B/10B special code groups (special code groups). Because only the K28.1, K28.5, or K28.7 code group includes unique b'0011111' (comma+) or b'1100000' (comma-), any one of the K28.1, K28.5, or K28.7 code group may be used as the first control code block and included in the first code block set. In this way, the first control code block in the first code block set can be quickly identified by searching for a comma in the first code block set, and therefore the boundary code block between the first code block set and the adjacent code block set is determined based on the first control code block.

In the following descriptions, to distinguish between the subframe that includes the information field and another subframe in the plurality of subframes included in the training frame, the first subframe may be regarded as another subframe that does not include the information field. In this case, the subframe that includes the information field in the training frame may be denoted as a second subframe.

In this way, performing code block encoding on the training frame obtained in S101 includes: S21: Perform code block encoding on each of a plurality of first subframes to obtain a plurality of first code block sets, where each of the plurality of first code block sets includes a first control code block. S22: Perform code block encoding on the second subframe to obtain a second code block set.

In a possible implementation, for the first code block set obtained in S21, the first control code block may be a start code block, an end code block, or an intermediate code block of the first code block set.

In an example, if the first control code block is the start code block or the end code block of the first code block set, the first control code block may be used as the boundary code block between the first code block set and the adjacent code block set. The first control code block is represented by K, and a data code block is represented by D. In this case, when the first control code block is the start code block of the first code block set, the first code block set may be represented by KDD...D; or when the first control code block is the end code block of the first code block set, the first code block set may be represented by DD...DK.

In another example, if the first control code block is the intermediate code block of the first code block set, the first PHY may determine the boundary code block between the first code block set and the adjacent code block set based on a position of the first control code block in the first code block set. It may be understood that, if the first control code block in the first code block set is known, and an offset (in terms of a bit or a quantity of code blocks) of the first control code block in the first code block set relative to the boundary code block is known, a code block at a position offset from the first control code block in the first code block set by the offset of the first control code block relative to the boundary code block may be determined as the boundary code block. The first control code block is still represented by K, and a data code block is still represented by D. In this case, when the first control code block is the intermediate code block of the first code block set, the first code block set may be represented by DD...DKD...D.

It should be noted that a quantity of data code blocks (that is, D in the example) in the first code block set is determined based on a length of the first subframe. For example, it is assumed that the length of the first subframe is 128 bits, and code block encoding is implemented in the 8B/10B manner. Because the 128 bits include sixteen 8-bit units, the first code block set may include sixteen 10-bit code blocks. If the first code block set includes one first control code block, the first code block set may further include 15 data code blocks.

In a possible implementation, the second code block set obtained in S22 may include a plurality of data code blocks, and does not include a control code block; or may include a second control code block. A pre-encoding value of the second control code block may be the same as or different from a pre-encoding value of the first control code block, a quantity of second control code blocks may be the same as or different from a quantity of first control code blocks, and positions of the second control code block and the first control code block in corresponding code block sets may be the same or different.

In an example, the second code block set includes the plurality of data code blocks. This example may be combined with any case in which the first control code block is the start code block, the end code block, or the intermediate code block of the first code block set. For example, the first control code block is still represented by K, a data code block is still represented by D, and the first control code block is the start code block of the first code block set. After code block encoding provided in this embodiment of this application is performed on the training frame, a plurality of obtained code block sets may be shown in FIG. 5. The plurality of code block sets sequentially include a plurality of first code block sets and one second code block set. Each of the plurality of first code block sets may be represented by KDD...D, and the second code block set may be represented by DD...D. A quantity of data code blocks in the second code block set may be one more than a quantity of data code blocks in the first code block set, and a quantity of code blocks included in the second code block set may be the same as a quantity of code blocks included in each first code block set.

In another example, a case in which the second code block set includes the second control code block, and the pre-encoding value of the second control code block is the same as the pre-encoding value of the first control code block may also be combined with any case in which the first control code block is the start code block, the end code block, or the intermediate code block of the first code block set. If the first control code block is K28.1, the second control code block may also be K28.1. If the first control code block is K28.5, the second control code block may also be K28.5. If the first control code block is K28.7, the second control code block may also be K28.7. It should be noted that that pre-encoding values of control code blocks are the same may be understood as meaning that control variable names corresponding to the control code blocks are the same, or that hexadecimal or binary input values corresponding to the control code blocks are the same. In this case, the quantity of second control code blocks included in the second code block set may be the same as or different from the quantity of first control code blocks included in the first code block set, and a position of the first control code block in the first code block set may be the same as or different from a position of the second control code block in the second code block set. The quantity of second control code blocks included in the second code block set is at least one, and the quantity of first control code blocks included in the first code block set is at least one.

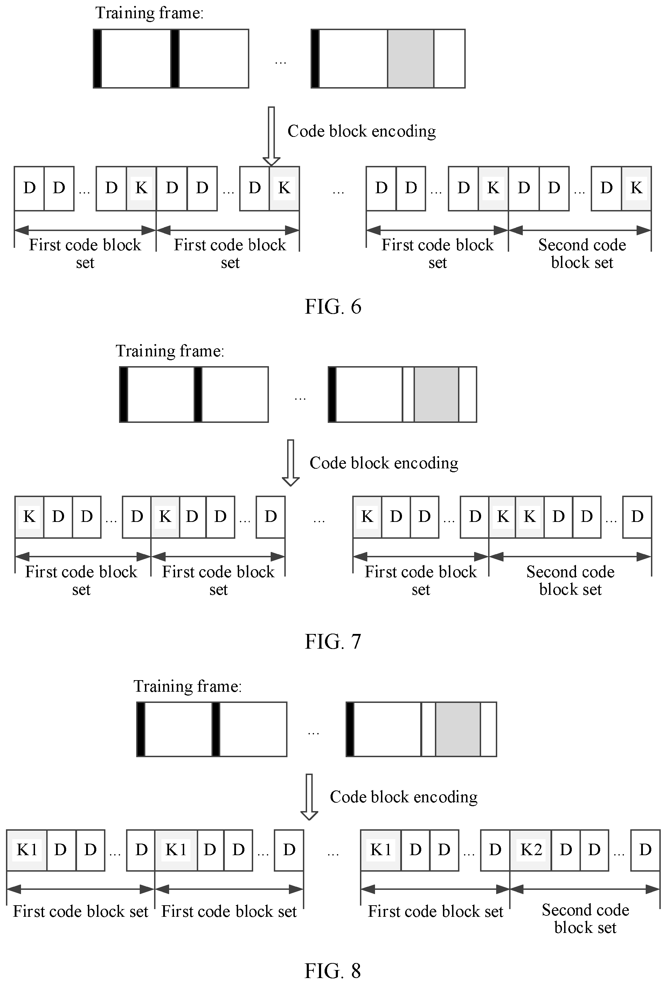

For a case in which the second code block set includes the second control code block, the pre-encoding value of the second control code block is the same as the pre-encoding value of the first code block, the quantity of second control code blocks included in the second code block set is the same as the quantity of first control code blocks included in the first code block set, and the position of the first control code block in the first code block set is the same as the position of the second control code block in the second code block set, for example, the first code block set includes one first control code block, and the second code block set includes one second control code block. In a case, when both the first control code block and the second control code block are start code blocks of the corresponding code block sets, both the first code block set and the second code block set may be represented by KDD...D. In another case, when both the first control code block and the second control code block are end code blocks of the corresponding code block sets, both the first code block set and the second code block set may be represented by DD...DK. In still another case, when both the first control code block and the second control code block are intermediate code blocks of the corresponding code block sets, both the first code block set and the second code block set may be represented by DD...DKD...D. For example, the first control code block is the end code block of the first code block set, and the second control code block is the end code block of the second code block set. After code block encoding provided in this embodiment of this application is performed on the training frame, a plurality of obtained code block sets may be shown in FIG. 6. The plurality of code block sets sequentially include a plurality of first code block sets and one second code block set. Both the first code block set and the second code block set may be represented by DD...DK.

For a case in which the second code block set includes the second control code block, the pre-encoding value of the second control code block is the same as the pre-encoding value of the first code block, the quantity of second control code blocks included in the second code block set is different from the quantity of first control code blocks included in the first code block set, and the position of the first control code block in the first code block set is the same as the position of the second control code block in the second code block set, for example, the first code block set includes one first control code block, and the second code block set includes two second control code blocks. In a case, when both the first control code block and the second control code block are start code blocks of the corresponding code block sets, the first code block set may be represented by KDD...D, and the second code block set may be represented by KKDD...D. In another case, when both the first control code block and the second control code block are end code blocks of the corresponding code block sets, the first code block set may be represented by DD...DK, and the second code block set may be represented by DD...DKK. In still another case, when both the first control code block and the second control code block are intermediate code blocks of the corresponding code block sets, the first code block set may be represented by DD...DKD...D, and the second code block set may be represented by DD...DKKD...D. For example, the first control code block is the start code block of the first code block set, and the second control code block is the start code block of the second code block set. After code block encoding provided in this embodiment of this application is performed on the training frame, a plurality of obtained code block sets may be shown in FIG. 7. The plurality of code block sets sequentially include a plurality of first code block sets and one second code block set. Each of the plurality of first code block sets may be represented by KDD...D, and the second code block set may be represented by KKDD...D.

It should be noted that, on the premise that the second code block set includes the second control code block, and the pre-encoding value of the second control code block is the same as the pre-encoding value of the first code block, for a case in which the quantity of second control code blocks included in the second code block set is different from the quantity of first control code blocks included in the first code block set, and the position of the first control code block in the first code block set is different from the position of the second control code block in the second code block set, or a case in which the quantity of second control code blocks included in the second code block set is the same as the quantity of first control code blocks included in the first code block set, and the position of the first control code block in the first code block set is different from the position of the second control code block in the second code block set, different code block encoding results may be obtained through flexible combination. Details are not described in this embodiment of this application.

In another case, a case in which the second code block set includes the second control code block, and the pre-encoding value of the second control code block is different from the pre-encoding value of the first code block may also be combined with any case in which the first control code block is the start code block, the end code block, or the intermediate code block of the first code block set. If the first control code block is K28.1, the second control code block may be K28.5 or K28.7. If the first control code block is K28.5, the second control code block may be K28.1 or K28.7. If the first control code block is K28.7, the second control code block may be K28.1 or K28.5. In this case, the quantity of second control code blocks included in the second code block set may be the same as or different from the quantity of first control code blocks included in the first code block set, and the position of the first control code block in the first code block set may be the same as or different from the position of the second control code block in the second code block set. The quantity of second control code blocks included in the second code block set is at least one, and the quantity of first control code blocks included in the first code block set is at least one. K1 represents the first control code block, and K2 represents the second control code block. In a case, when both the first control code block and the second control code block are start code blocks of the corresponding code block sets, the first code block set may be represented by K1DD...D, and the second code block set may be represented by K2DD...D. In another case, when both the first control code block and the second control code block are end code blocks of the corresponding code block sets, the first code block set may be represented by DD...DK1, and the second code block set may be represented by DD...DK2. In still another case, when both the first control code block and the second control code block are intermediate code blocks of the corresponding code block sets, the first code block set may be represented by DD...DK1D...D, and the second code block set may be represented by DD...DK2D...D. For example, the first control code block is the start code block of the first code block set, and the second control code block is the start code block of the second code block set. After code block encoding provided in this embodiment of this application is performed on the training frame, a plurality of obtained code block sets may be shown in FIG. 8. The plurality of code block sets sequentially include a plurality of first code block sets and one second code block set. Each of the plurality of first code block sets may be represented by K1DD...D, and the second code block set may be represented by K2DD...D.

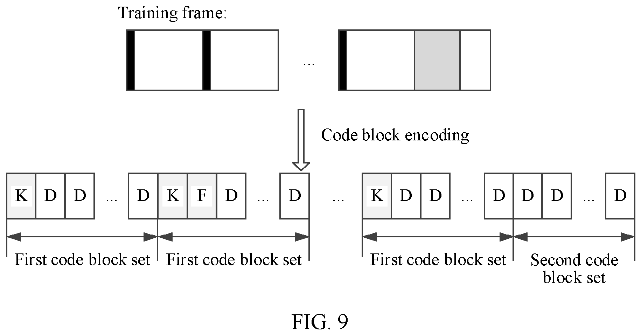

In a possible implementation, any one or more of the plurality of first code block sets obtained in S21 may further include a third control code block, and the third control code block can indicate a position, in the plurality of code block sets, of a first code block set to which the third control code block belongs. The third control code block is a control code block for which a position, in the plurality of code block sets, of the first code block set to which the third control code block belongs is known in a code block encoding strategy provided in this embodiment of this application. Different from the first control code block, the third control code block may be any control code block that does not include a comma, and includes but is not limited to K23.7 or K27.7. For example, the first control code block is the start code block of the first code block set, a 2^{nd} first code block set includes the third control code block adjacent to the first control code block, and the second code block set includes a plurality of data code blocks. The first control code block is still represented by K, the third control code block is represented by F, and the data code block is represented by D. After code block encoding provided in this embodiment of this application is performed on the training frame, a plurality of obtained code block sets may be shown in FIG. 9. The plurality of code block sets sequentially include a plurality of first code block sets and one second code block set. A first code block set other than the 2^{nd} first code block set in the plurality of first code block sets may be represented by KDD...D, the 2^{nd} first code block set may be represented by KFD...D, and the second code block set may be represented by DD...D.

It should be noted that, when the second control code block is the start code block of the second code block set, the information field in the second subframe is required not to occupy first several bits of the second subframe. For example, the information field shown in FIG. 1 needs to be moved to an intermediate position or an end position of a subframe L/N. Similarly, when the second control code block is the end code block of the second code block set, the information field in the second subframe is required not to occupy last several bits of the second subframe. That is, the information field shown in FIG. 1 needs to be maintained at a start position of a subframe L/N or moved to an intermediate position of the subframe L/N.

The foregoing possible cases after code block encoding of the training frame are all possible results obtained according to code block encoding strategies provided in this embodiment of this application. For technical effect of different code block encoding strategies and corresponding decoding strategies, refer to related descriptions in the following method 200.

In a possible implementation, after S102, the method 100 may further include: The first PHY sends the first code block set to the second PHY. In an example, with reference to the scenarios shown in FIG. a(1) and FIG. 3a(2) to FIG. 3d(1) and FIG. 3d(2), the first PHY may first perform PAM mapping on the plurality of code block sets (including the first code block set) obtained by performing code block encoding on the training frame, to obtain a symbol sequence. Then, the first PHY sends the symbol sequence to the second PHY via a cable, to implement signal transmission between the first PHY and the second PHY.

It can be learned that, according to the method 100, a code block set obtained by performing code block encoding on a subframe in a training frame includes a control code block, and the control code block is used to determine a boundary code block between the code block set and an adjacent code block set. Therefore, in a process of performing code block decoding on a training sequence including the training frame, a boundary of the subframe in the obtained training sequence can be quickly and accurately determined based on the control code block, to prepare for fast and accurate implementation of scrambling synchronization, training frame delimitation, or FEC delimitation.

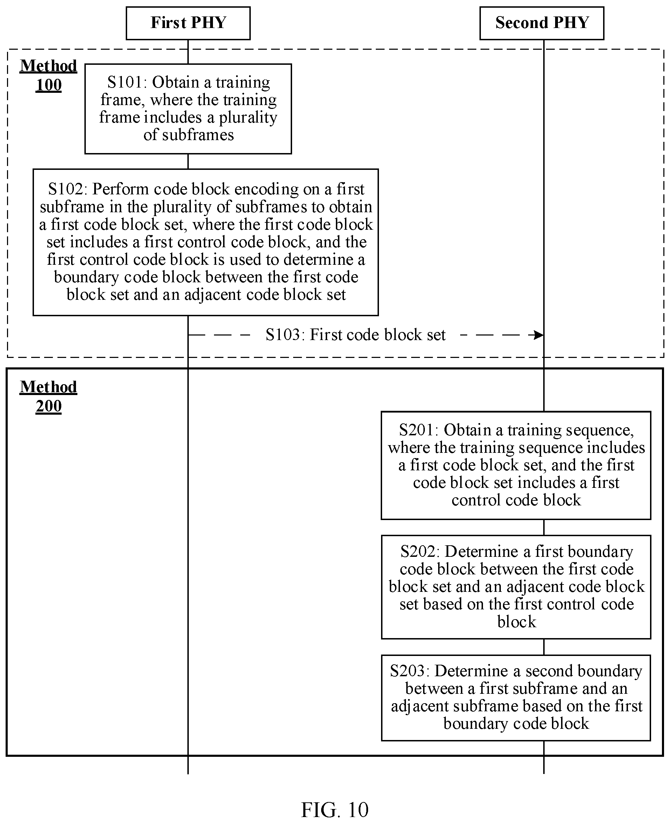

FIG. 10 is a schematic flowchart of a decoding method 200 according to an embodiment of this application. In the method 200, this embodiment of this application is described by using a second PHY as an execution body. For example, the second PHY may be any PHY in the scenarios shown in FIG. 3a(1) and FIG. 3a(2) to FIG. 3d(1) and FIG. 3d(2). For example, the second PHY corresponds to the PHY 2 in FIG. 3a(1) and FIG. 3a(2). In this case, the method 200 may be understood as being implemented by the PHY 2, or may be understood as being implemented by the switch 2 including the PHY 2. For another example, the second PHY corresponds to the PHY 4 in FIG. 3d(1) and FIG. 3d(2). In this case, the method 200 may be understood as being implemented by the PHY 4, or may be understood as being implemented by the terminal device 4 including the PHY 4.

As shown in FIG. 10, the method 200 may include, for example, the following S201 to S203:
S201: The second PHY obtains a training sequence, where the training sequence includes a first code block set, and the first code block set includes a first control code block.

In an example, S201 may include: After receiving a symbol sequence sent by a first PHY, the second PHY performs PAM demapping on the received symbol sequence to obtain a corresponding bit sequence, where the bit sequence may be used as the training sequence obtained in S201. In this case, before S201, the first PHY may perform S101 to S103, to prepare for the second PHY, as a receiver, to perform S201 to S203.

For a manner of processing the training sequence by the second PHY, a serial manner may be used, or a parallel manner may be used. Parallel processing means processing a bit sequence corresponding to m (m is usually an integer multiple of 2) bits per clock cycle. Therefore, parallel processing can reduce a requirement on a hardware clock frequency. m=50 is used as an example. To be specific, a bit sequence corresponding to 50 bits is processed in the parallel manner per clock cycle, and the second PHY may first align a code block boundary with a clock edge in a manner such as code block reassembly. For example, first, a first control code block including a comma field is searched for in the 50 bits, to implement identification of the code block boundary. Assuming that a 14^{th} bit in a data set of a clock cycle corresponds to a start boundary of a code block, the 14^{th} bit to a 50^{th} bit of the clock cycle and a 1^{st} bit to a 13^{th} bit of a next clock cycle may be reassembled to form a new data set of a clock cycle. In this way, it is ensured that a data set of each clock cycle includes five complete 10-bit code blocks.

If a process in which the first PHY performs PAM mapping on a plurality of code block sets obtained by performing code block encoding on a training frame, a cable transmission process, and a process in which the second PHY performs analog and digital signal processing and PAM demapping on a received signal are all correct, a training sequence restored by a receive end may be understood as data obtained by performing code block encoding on at least one training frame by the first PHY, where the start of the training sequence may be any code block set corresponding to a training frame, and the end of the training sequence may be any code block set corresponding to the training frame or another training frame. It should be noted that the training sequence does not necessarily include all code block sets corresponding to any training frame. For example, the training sequence may sequentially include: all code block sets after a 3^{rd} first code block set that correspond to a training frame A, all code block sets corresponding to a training frame B, all code block sets corresponding to a training frame C, and first five first code block sets corresponding to a training frame D.

For related descriptions of the first code block set and the first control code block in S201, refer to related descriptions of S102 in the method 100.

S202: The second PHY determines a first boundary code block between the first code block set and an adjacent code block set based on the first control code block.

In an example, if the first control code block is a start code block or an end code block of the first code block set, the first control code block is the first boundary code block between the first code block set and the adjacent code block set. In the scenarios shown in FIG. 5, FIG. 7, FIG. 8, and FIG. 9, the first control code block is the start code block of the first code block set, and the first control code block may be used as a first boundary code block between the first code block set and an adjacent previous code block set. In the scenario shown in FIG. 6, the first control code block is the end code block of the first code block set, and the first control code block may be used as a first boundary code block between the first code block set and an adjacent next code block set.

In another example, if the first control code block is an intermediate code block of the first code block set, the first boundary code block may be determined based on the first control code block and an offset (in terms of a bit or a quantity of code blocks) of the first control code block in the first code block set relative to the first boundary code block. For example, the first boundary code block may be determined by offsetting the first control code block in the first code block set by the offset of the first control code block relative to the first boundary code block.

It can be learned that in S202, the first control code block in the first code block set is identified, so that the first boundary code block between the first code block set and the adjacent code block set can be quickly determined based on the first control code block, to prepare for determining a subframe boundary in S203.

It should be noted that, after reliable code block delimitation is completed in S202, a code block set delimitation result may also be used for initialization of a PCS scrambler. For example, an initialization value of the PCS scrambler may be selected from a training bit stream obtained by decoding the first boundary code block. A PMA training scenario is used as an example. In a training bit stream obtained by decoding the first code block set starting from the first boundary code block, a 1^{st} bit is inverted, and another bit may remain unchanged. After the PCS scrambler is initialized, an exclusive OR operation is performed with the training bit stream obtained through decoding, to implement descrambling.

In a possible implementation, to improve reliability of code block set delimitation, the following operations may be performed: A position of the first control code block is used as a reference to infer a position at which a subsequent first control code block needs to occur, and reliability of code block set delimitation according to S202 is determined based on whether a first control code block actually occurs at the position at which the first control code block needs to occur. In consideration of impact of a bit error rate, a preset value may be set. In a target quantity of training frames, if a quantity of first control code blocks that actually occur at positions at which first control code blocks need to occur is greater than or equal to the preset value, code block set delimitation is regarded reliable. The preset value may be a minimum value of a quantity of first control code blocks that are allowed to actually occur at positions at which first control code blocks need to occur, in the target quantity of training frames, under reliable code block set delimitation.

For example, a training frame has a total length of L bits, and includes (L/N)=M subframes. N is a length of each subframe. After code block encoding is performed on each subframe in an 8B/10B manner, a corresponding code block set including (L/8M)=(N/8) code blocks is generated. It is assumed that a second code block set corresponding to a subframe in which an information field is located includes a plurality of data code blocks, and a 1^{st} code block in a first code block set generated for another subframe is a first control code block including a comma field, as shown in FIG. 5. In this case, the second PHY may search for the comma field in a training sequence corresponding to a received symbol sequence to preliminarily identify the first control code block, and use the first control code block as a first boundary code block between the first code block set and an adjacent code block set. Starting from a current first control code block, extraction is periodically performed at intervals of (L/8M-1) code blocks, to obtain M code blocks. In an ideal case, if code block set delimitation is correct, there are at least (M-1) first control code blocks in the M code blocks, that is, 10*(M-1) bits match exactly. However, due to a cause such as a link bit error, in the ideal case, a probability that a condition (that is, 10*(M-1) bits match exactly) for determining accuracy of code block set delimitation is met is very low. Therefore, the condition may be properly modified based on an error-tolerant condition. For example, for each code block, whether the code block is a first control code block may be determined based on whether bit content at some positions is matched. For example, for a control code block generated through 8B/10B encoding, if content at a position corresponding to a comma in the 10-bit code block is b'0011111' or b'1100000', it is considered that the current code block is a first control code block. For P obtained code blocks, if there are O first control code blocks, it may be considered that current code block set delimitation is reliable. For another example, for P obtained code blocks, if a proportion of first control code blocks reaches X%, it may be considered that current code block set delimitation is reliable. P may be less than or equal to M, and the preset value may be the quantity O of first control code blocks that actually occur or the proportion X% (for example, 80%) of first control code blocks that actually occur. It should be noted that specific values of P, O, and X may be specifically determined based on error-tolerance considerations, for example, may be determined based on a bit error rate of a link in a training mode.

S203: The second PHY determines a second boundary between a first subframe and an adjacent subframe based on the first boundary code block.

In an example, the second PHY may obtain indication information according to, for example, a delimitation rule. The indication information can provide whether a current data set for parallel processing includes a first boundary code block, and position information of the first boundary code block in the current data set. Therefore, it may be understood that the indication information indicates a position of the first boundary code block in a corresponding code block set. In this case, for example, S203 may include: decoding, based on the first boundary code block, the training sequence obtained in S201, to obtain a training bit stream that includes at least the first subframe; and determining the second boundary between the first subframe and the adjacent subframe in the training bit stream based on the indication information. An example in which a clock cycle includes a 50-bit data set and code block decoding is implemented in the 8B/10B manner is still used. One data set may include five code blocks. In this case, a first boundary code block in the five code blocks may be a 1^{st} code block, a 2^{nd} code block, a 3^{rd} code block, a 4^{th} code block, or a 5^{th} code block. Therefore, indication information with at least three bits may be used to indicate which code block in the data set is the boundary code block, and a position of a boundary of a subframe may be determined based on the indication information in a parallel bit set of a training bit stream obtained through code block decoding. For example, indication information=010 indicates that the 2^{nd} code block in the 50-bit data set is the boundary code block. Correspondingly, after decoding, it may be determined that a 9^{th} bit corresponds to a 1^{st} bit of the subframe, that is, the 9^{th} bit after decoding is the boundary of the subframe.

In another example, S203 may include: The second PHY first decodes the training sequence to obtain a training bit stream; performs exclusive OR (that is, descrambling) on the training bit stream and a PRBS generated by the PCS scrambler; determines whether a bit stream obtained by an exclusive OR operation within preset time meets an expected characteristic; and if the bit stream meets the expected characteristic, determines that scrambling is synchronized; or if the bit stream does not meet the expected characteristic, determines that scrambling is not synchronized. When it is determined that scrambling is synchronized, the second PHY may determine a boundary of a subframe based on a characteristic of the bit stream obtained through descrambling, where the boundary includes the second boundary between the first subframe and the adjacent subframe. It should be noted that the second PHY may decode the training sequence based on a pre-assumed code block boundary. If it is determined that scrambling is not synchronized, it indicates that the pre-assumed code block boundary is inaccurate. In this case, the training sequence may be decoded again after a 1-bit shift is performed on the code block boundary. This process is repeated until it is determined, after the training sequence is decoded, that scrambling is synchronized.

It should be noted that the first code block set in the foregoing descriptions may be a code block set obtained by performing code block encoding on any subframe of the training frame. To distinguish between a code block set obtained by performing code block encoding on a subframe that includes the information field and a code block set obtained by performing code block encoding on a subframe that does not include the information field, the following provides related descriptions by using the first code block set to represent a code block set obtained by performing code block encoding on the first subframe that does not include the information field and using the second code block set to represent a code block set obtained by performing code block encoding on a second subframe that includes the information field. For related descriptions of the information field and the second code block set, refer to the related descriptions in the method 100.

In an example, the second code block set may include a second control code block. In this case, the method 200 may further include: S204: The second PHY determines a third boundary code block between the second code block set and an adjacent code block set based on the second control code block. S205: The second PHY determines a fourth boundary between the second subframe and an adjacent subframe based on the third boundary code block. The fourth boundary may be, for example, a boundary between the second subframe and an adjacent 1^{st} subframe of a next training frame; or the fourth boundary may be a boundary between the second subframe and an adjacent previous first subframe.

A manner of determining the third boundary code block in S204 varies depending on a strategy used for code block encoding. For example, it is assumed that a pre-encoding value of the second control code block is the same as a pre-encoding value of the first control code block, a quantity of the second control code blocks is the same as a quantity of first control code blocks, and positions of the second control code block and the first control code block in corresponding code block sets are also the same, as shown in FIG. 6. In this case, the information field and the fourth boundary between the second subframe in which the information field is located and the adjacent subframe may be identified in a manner of determining whether a characteristic of a bit stream obtained through code block decoding and descrambling matches an information characteristic of the information field. For another example, it is assumed that a pre-encoding value of the second control code block is the same as a pre-encoding value of the first control code block, positions of the second control code block and the first control code block in corresponding code block sets are the same, and a quantity of second control code blocks is different from a quantity of first control code blocks, as shown in FIG. 7. In this case, the second code block set in which the information field is located may be determined based on the quantity of second control code blocks, and then the third boundary code block of the second code block set is determined based on the second control code block in the second code block set, to determine the fourth boundary between the second subframe and the adjacent subframe. For still another example, it is assumed that a pre-encoding value of the second control code block is different from a pre-encoding value of the first control code block, but positions of the second control code block and the first control code block in corresponding code block sets are the same, and a quantity of second control code blocks is the same as a quantity of first control code blocks, as shown in FIG. 8. In this case, the fourth boundary between the second subframe and the adjacent subframe may be determined based on a post-decoding value of the second control code block and a bit position of the second control code block in the training frame.

In another example, the second code block set may include a plurality of data code blocks, and does not include a second control code block. In this case, the method may further include: S204: The second PHY determines a third boundary code block between the second code block set and an adjacent code block set based on a data code block that is in the second code block set and that corresponds to an occurrence position of the first control code block in the first code block set. S205: The second PHY determines a fourth boundary between the second subframe and an adjacent subframe based on the third boundary code block. For example, as shown in FIG. 5, when periodic search for a first control code block is performed, once it is detected that a data code block occupies a position at which a first control code block needs to occur, it may be considered that a current code block set is the second code block set in which the information field is located. Therefore, a position (actually a data code block) that occupies the first control code block in the second code block set is denoted as a third boundary code block between the second code block set and a previous code block set, and a fourth boundary between the second subframe and an adjacent subframe is determined based on the third boundary code block.

In the foregoing two examples, for a specific implementation of S205, reference may be made to the foregoing two possible implementations in S203.

In a possible implementation, after S203, the method 200 may further include: S206: Determine a training frame, where the training frame may include at least the first subframe. To be specific, after subframe delimitation is completed, training frame delimitation may be performed based on a subframe delimitation result, to obtain at least one training frame included in the training bit stream obtained by decoding the training sequence.

In an example, S206 may include: decoding the training sequence to obtain a training bit stream; determining boundaries of subframes based on the characteristic obtained by descrambling the training bit stream; further determining, by determining whether the characteristic of the bit stream obtained through descrambling matches the information characteristic of the information field, the subframe that includes the information field in the training bit stream; determining an end boundary of the subframe that includes the information field as a boundary of a training frame; and obtaining the at least one training frame from the training bit stream based on the boundary of the training frame.

The PMA training frame shown in FIG. 1 is used as an example. For the first PHY, 1^{st} bits of all first subframes other than a last second subframe that carries an information field are obtained through inversion. Therefore, under a low bit error rate, a training bit stream for determining scrambling synchronization needs to meet: In the training bit stream, for a bit sequence *S[n] (0* ≤ n ≤ *L -* 1) of a same length as the training frame (including M subframes), a set *T (T[m] = S[k +* m * *N],* 0 ≤ m < *M)* of bits taken at intervals of a specific length (N-1 bits, where N=L/M) starting from a position *k* (0 *≤ k < L*/*M)* is almost all 1s (a value of a 1^{st} bit of the second subframe that carries the information field after descrambling may be 1 or 0, and values of the 1^{st} bits of the other first subframes after descrambling are all 1), and information ( $S \left[k+x∗\frac{L}{M}+1:k+\left(x+1\right)∗\frac{L}{M}-1\right]$) between two adjacent bits having a value of 1 is all Os. Therefore, it is determined that scrambling is synchronized, and the position k corresponds to a start boundary of a subframe. A position ( $S \left[k+y∗\frac{L}{M}\right]$ to $S \left[k+y∗\frac{L}{M}+95\right]$) at which the information field is located and a boundary (that is, $S \left[k+\left(y+1\right)∗\frac{L}{M}\right]$, corresponding to a 1^{st} bit of a training frame) of the training frame are obtained based on a position (for example, T[y]) at which consecutive bits having a value of 1 are interrupted in the bit set *T[m],* or by performing matching on $S \left[k+y∗\frac{L}{M}:k+y∗\frac{L}{M}+23\right]$ and a start frame delimiter field of InfoField. In this way, the boundary of the subframe, the information field, and the boundary of the training frame can be accurately determined according to a rule that each training frame in the training bit stream obtained through decoding needs to follow.

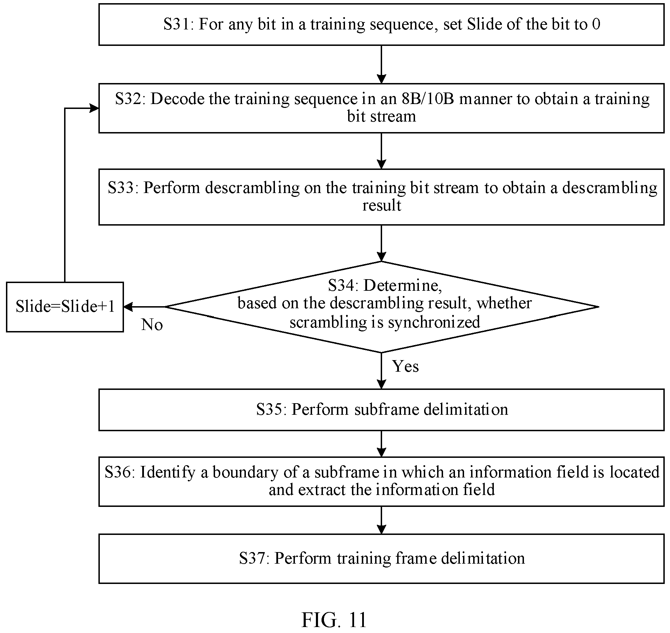

An example in which decoding is implemented in the 8B/10B manner is used, and for example, for a decoding procedure corresponding to this example, reference may be made to FIG. 11. For example, the procedure may include: S31: For any bit in the training sequence, set Slide of the bit to 0. S32: Decode the training sequence in the 8B/10B manner to obtain a training bit stream. S33: Perform descrambling on the training bit stream to obtain a descrambling result. S34: Determine, based on the descrambling result, whether scrambling is synchronized; and if scrambling is synchronized, perform S35; or if scrambling is not synchronized, set Slide=Slide+1, and return to perform S32 again. S35: Perform subframe delimitation. S36: Identify a boundary of a subframe in which an information field is located and extract the information field. S37: Perform training frame delimitation. In this way, accurate subframe delimitation can be implemented on the training sequence obtained through code block encoding, and therefore information field extraction and training frame delimitation are implemented.

In another example, if the second boundary and the fourth boundary are determined in the method 200, for example, S206 may include: decoding the training sequence to obtain a training bit stream; and determining the training frame in the training bit stream based on the second boundary and the fourth boundary. When the second subframe is located at a boundary position of a training frame, if the fourth boundary in the training bit stream is determined, the fourth boundary may be directly used as a boundary between different training frames, to obtain the at least one training frame from the training bit stream. When the second subframe is located at an intermediate position of a training frame, if the fourth boundary in the training bit stream is determined, a boundary of the training frame may be determined based on a position (for example, a subframe sequence number) of the second subframe in the training frame and the fourth boundary, to obtain the at least one training frame from the training bit stream. In this way, the boundary of the training frame can be quickly determined with reference to the boundary of the second subframe that includes the information field and the boundary of the first subframe that does not include the information field.

In still another example, if at least one first code block set in the training sequence includes a third control code block in addition to a first control code block, and the third control code block indicates a position, in a plurality of code block sets, of the first code block set in which the third control code block is located, regardless of whether a boundary of the second subframe that includes the information field is identified, training frame delimitation can be implemented. For example, S206 may include: decoding the training sequence to obtain a training bit stream; and determining the training frame in the training bit stream based on the third control code block and the second boundary. As shown in FIG. 9, in addition to performing training frame delimitation based on the second boundary and the fourth boundary, training frame delimitation may be further implemented based on the method shown in this example. A second boundary of each first subframe is known, the third control code block is further known as a code block after a first control code block in a 2^{nd} first code block set, and a quantity and a length of subframes included in each training frame are fixed. Therefore, a boundary of a training frame may be determined by identifying the third control code block in the training sequence, to obtain the at least one training frame in the training bit stream based on the boundary of the training frame. In this way, the boundary of the training frame can be quickly determined with reference to the boundary of the first subframe that does not include the information field and the third control code block that indicates the position.

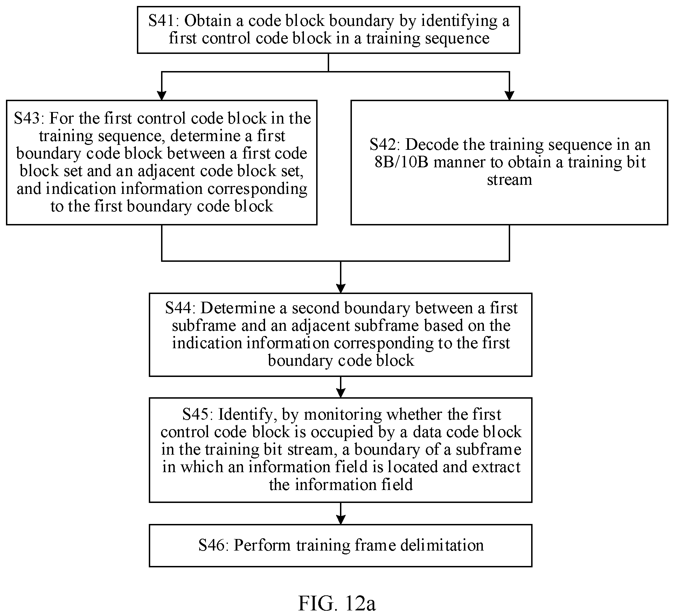

An example in which decoding is implemented in the 8B/10B manner and the second code block set includes a plurality of data code blocks is used, and for example, for a decoding procedure corresponding to the foregoing two examples, reference may be made to FIG. 12a. For example, the procedure may include: S41: Obtain a code block boundary by identifying a first control code block in the training sequence. S42: Decode the training sequence in the 8B/10B manner to obtain a training bit stream. S43: For the first control code block in the training sequence, determine a first boundary code block between a first code block set and an adjacent code block set, and indication information corresponding to the first boundary code block. S44: Determine a second boundary between a first subframe and an adjacent subframe based on the indication information corresponding to the first boundary code block. S45: Identify, by monitoring whether the first control code block is occupied by a data code block in the training bit stream, a boundary of a subframe in which an information field is located. S46: Perform training frame delimitation. S42 and S43 may be simultaneously performed or sequentially performed between S41 and S44. A sequence of performing the steps may not be limited. If descrambling is performed on the training bit stream before S45, a step of extracting the information field may be further performed when S45 is performed or after S45.

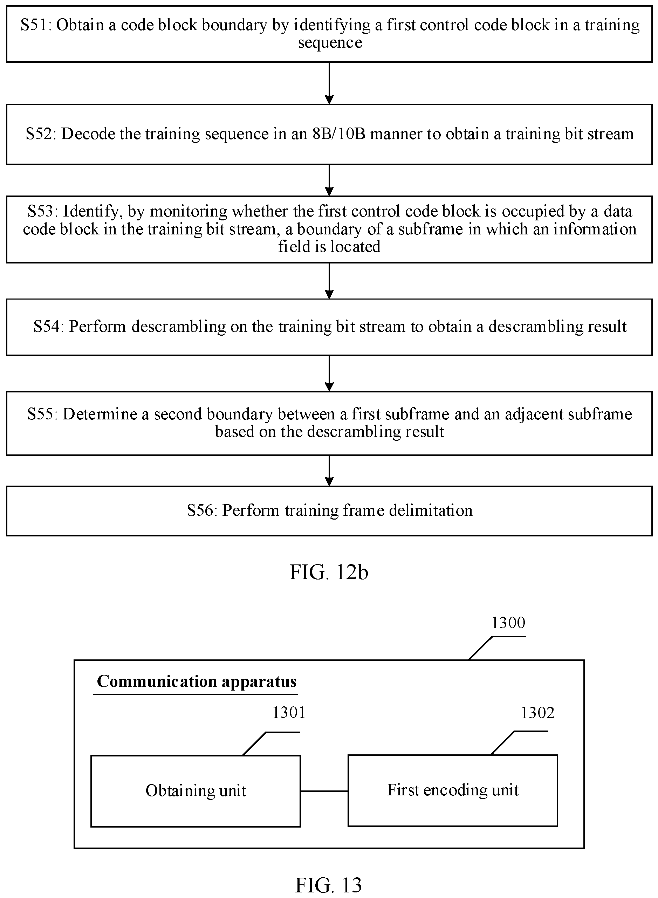

Alternatively, an example in which decoding is implemented in the 8B/10B manner and the second code block set includes a plurality of data code blocks is used, and for example, for a decoding procedure corresponding to the foregoing two examples, reference may be made to FIG. 12b. For example, the procedure may include: S51: Obtain a code block boundary by identifying a first control code block in the training sequence. S52: Decode the training sequence in the 8B/10B manner to obtain a training bit stream. S53: Identify, by monitoring whether the first control code block is occupied by a data code block in the training bit stream, a boundary of a subframe in which an information field is located. S54: Perform descrambling on the training bit stream to obtain a descrambling result. S55: Determine a second boundary between a first subframe and an adjacent subframe based on the descrambling result. S56: Perform training frame delimitation. After S54, a step of extracting the information field may be further performed. In this way, fast and accurate subframe delimitation can be implemented on the training sequence obtained through code block encoding, and therefore fast and accurate training frame delimitation and information field extraction are implemented.

It should be noted that fast and accurate training frame delimitation is critical for quickly switching to a data mode and ensuring accuracy of an FEC boundary in the data mode. Optionally, accuracy of training frame delimitation can be further improved by checking whether bit stream information obtained through descrambling is consistent with the SFD of InfoField, to implement reliable FEC delimitation.

In this way, according to the method 200, a code block decoding strategy corresponding to the training frame encoding method provided in embodiments of this application is defined, so that in a process of performing code block decoding on an obtained training sequence, a boundary code block between a code block set and an adjacent code block set can be quickly and accurately determined based on a control code block included in the code block set in the training sequence, and a boundary between a corresponding subframe obtained by performing code block decoding on the code block set and an adjacent subframe is determined based on the boundary code block. Therefore, the boundary of the subframe in the obtained training sequence is quickly and accurately determined, so that it is possible to quickly and accurately implement scrambling synchronization, training frame delimitation, or FEC delimitation.

It should be noted that in the foregoing embodiments, that encoding or decoding is performed in the 8B/10B manner is used as an example for description, and this does not constitute a limitation on an encoding or decoding manner to which embodiments of this application are applicable. For example, embodiments of this application are further applicable to encoding or decoding in the 9B/10B manner.

It should be noted that the steps in the procedures in embodiments of this application may be combined or replaced when the technical effect of embodiments of this application can be implemented, and this does not constitute a special limitation on embodiments of this application.

Correspondingly, an embodiment of this application further provides a communication apparatus 1300 (which may also be referred to as an encoding apparatus 1300), as shown in FIG. 13. The communication apparatus 1300 is applied to a first PHY, and the communication apparatus 1300 may include an obtaining unit 1301 and a first encoding unit 1302.

The obtaining unit 1301 is configured to obtain a training frame, where the training frame includes a plurality of subframes. The obtaining unit 1301 may perform S101 shown in FIG. 4 or FIG. 9.

The first encoding unit 1302 is configured to perform code block encoding on a first subframe in the plurality of subframes to obtain a first code block set, where the first code block set includes a first control code block, and the first control code block is used to determine a boundary code block between the first code block set and an adjacent code block set. The first encoding unit 1302 may perform S102 shown in FIG. 4 or FIG. 9.

In a possible implementation, a second subframe in the plurality of subframes includes an information field, and the information field includes configuration information used for a link between the first PHY and a second PHY.

In a possible implementation, the apparatus 1300 may further include a second encoding unit. The second encoding unit is configured to perform code block encoding on the second subframe to obtain a second code block set, where the second code block set includes a second control code block.

In an example, a pre-encoding value of the first control code block is the same as a pre-encoding value of the second control code block.

In another example, a pre-encoding value of the first control code block is different from a pre-encoding value of the second control code block.

In still another example, a quantity of first control code blocks is different from a quantity of second control code blocks.

In yet another example, a position of the first control code block in the first code block set is different from a position of the second control code block in the second code block set.

In a possible implementation, the apparatus 1300 further includes a third encoding unit. The third encoding unit is configured to perform code block encoding on the second subframe to obtain a second code block set, where the second code block set includes a plurality of data code blocks.

In a possible implementation, the first control code block is a start code block or an end code block of the first code block set, and the first control code block is the boundary code block.

In another possible implementation, the first control code block is an intermediate code block of the first code block set, and the boundary code block is determined based on the position of the first control code block in the first code block set.

In a possible implementation, the first code block set further includes a third control code block, the third control code block indicates a position of the first code block set in a plurality of code block sets, and the plurality of code block sets are obtained by performing code block encoding on the training frame.

In a possible implementation, the apparatus 1300 may further include a sending unit. The sending unit is configured to send the first code block set to the second PHY. The sending unit may perform S103 shown in FIG. 9.

In a possible implementation, the first encoding unit 1302 is specifically configured to encode the first subframe in an 8B/10B manner to obtain the first code block set.

In a possible implementation, the training frame is a PMA training frame.

It should be noted that, for various specific embodiments of the communication apparatus 1300, reference may be made to related descriptions of the method 100 corresponding to FIG. 4 or FIG. 9. Details are not described in this embodiment again.

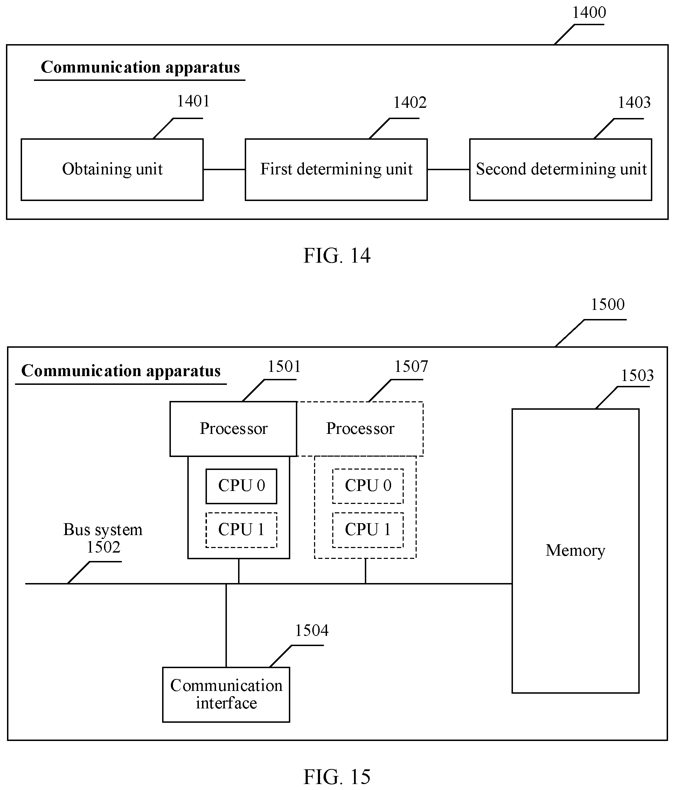

Correspondingly, an embodiment of this application further provides a communication apparatus 1400 (which may also be referred to as a decoding apparatus 1400), as shown in FIG. 14. The communication apparatus 1400 may include an obtaining unit 1401, a first determining unit 1402, and a second determining unit 1403.

The obtaining unit 1401 is configured to obtain a training sequence, where the training sequence includes a first code block set, and the first code block set includes a first control code block. The obtaining unit 1401 may perform S201 shown in FIG. 9.

The first determining unit 1402 is configured to determine a first boundary code block between the first code block set and an adjacent code block set based on the first control code block. The first determining unit 1402 may perform S202 shown in FIG. 9.

The second determining unit 1403 is configured to determine a second boundary between a first subframe and an adjacent subframe based on the first boundary code block. The second determining unit 1403 may perform S203 shown in FIG. 9.

In a possible implementation, the apparatus 1400 may further include a third determining unit. The third determining unit is configured to determine a training frame, where the training frame includes the first subframe.

In a possible implementation, the training sequence further includes a second code block set, the second code block set is obtained by performing code block encoding on a second subframe, the second subframe includes an information field, and the information field includes configuration information used for a link between a first PHY and a second PHY.

In an example, the second code block set includes a second control code block, and the apparatus 1400 further includes a fourth determining unit and a fifth determining unit. The fourth determining unit is configured to determine a third boundary code block between the second code block set and an adjacent code block set based on the second control code block. The fifth determining unit is configured to determine a fourth boundary between the second subframe and an adjacent subframe based on the third boundary code block.

In another example, the second code block set includes a plurality of data code blocks, and the apparatus 1400 further includes a sixth determining unit. The sixth determining unit is configured to determine a fourth boundary between the second subframe and an adjacent subframe based on a data code block that is in the second code block set and that corresponds to an occurrence position of the first control code block in the first code block set.

In this implementation, the third determining unit is specifically configured to: decode the training sequence to obtain a training bit stream; and determine the training frame in the training bit stream based on the second boundary and the fourth boundary.

In another possible implementation, the first code block set further includes a third control code block, the third control code block indicates a position, in a plurality of code block sets, of the first code block set including the third control code block, and the plurality of code block sets are obtained by performing code block encoding on the training frame. The third determining unit is specifically configured to: decode the training sequence to obtain a training bit stream; and determine a boundary of the training frame in the training bit stream based on the third control code block and the second boundary.

In a possible implementation, the second determining unit 1402 is specifically configured to: decode the training sequence based on the first boundary code block to obtain a training bit stream, where the training bit stream includes the first subframe; and determine the second boundary in the training bit stream based on indication information, where the indication information indicates a position of the first boundary code block in a corresponding code block set.

In a possible implementation, decoding is implemented in an 8B/10B manner.

It should be noted that, for various specific embodiments of the communication apparatus 1400, reference may be made to related descriptions of the method 200 corresponding to FIG. 9. Details are not described in this embodiment again.

With reference to FIG. 15, an embodiment of this application provides a communication apparatus 1500. The communication apparatus 1500 may be an execution body in any one of the foregoing embodiments. The communication apparatus 1500 may implement functions in the foregoing embodiments. The communication apparatus 1500 includes at least one processor 1501, a bus system 1502, a memory 1503, and at least one communication interface 1504.

The communication apparatus 1500 is an apparatus of a hardware structure, and may be configured to implement the functional modules in the communication apparatus 1300 shown in FIG. 13. For example, a person skilled in the art may figure out that the obtaining unit 1301 and the first encoding unit 1302 in the communication apparatus 1300 shown in FIG. 13 are implemented by the at least one processor 1501 by invoking code in the memory 1503. For another example, a person skilled in the art may figure out that the obtaining unit 1401, the first determining unit 1402, and the second determining unit 1403 in the communication apparatus 1400 shown in FIG. 14 may be implemented by the at least one processor 1501 by invoking code in the memory 1503.

Optionally, the communication apparatus 1500 may be a network device or a control entity that implements embodiments of this application.

Optionally, the processor 1501 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions in this application.

The bus system 1502 may include a path for transmitting information between the foregoing components.

The communication interface 1504 is configured to communicate with another device or a communication network.

The memory 1503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through a bus. The memory may alternatively be integrated with the processor.

The memory 1503 is configured to store application program code for executing the solutions in this application, and the processor 1501 controls the execution. The processor 1501 is configured to execute the application program code stored in the memory 1503, to implement the functions in the methods in this application.

During specific implementation, in an embodiment, the processor 1501 may include one or more CPUs, for example, a CPU 0 and a CPU 1 in FIG. 15.

During specific implementation, in an embodiment, the communication apparatus 1500 may include a plurality of processors, for example, the processor 1501 and a processor 1507 in FIG. 15. Each of these processors may be a single-core (single-CPU) processor or a multi-core (multi-CPU) processor. The processor herein may be one or more devices, circuits, and/or processing cores configured to process data (for example, computer program instructions).

It should be understood that the communication apparatuses or the communication devices in the foregoing various product forms respectively have any functions implemented by the execution body in the method embodiments. Details are not described herein again.

An embodiment of this application further provides a chip. The chip includes a processor and an interface circuit. The interface circuit is configured to receive instructions and transmit the instructions to the processor. The processor may be, for example, a specific implementation form of the packet processing apparatus in embodiments of this application, and may be configured to perform the method 100 or the method 200. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

In addition, an embodiment of this application further provides a communication apparatus. The communication apparatus includes a first PHY and/or a second PHY. The first PHY is configured to perform the method 100 shown in FIG. 4 or FIG. 9. The second PHY is configured to perform the method 200 shown in FIG. 9.

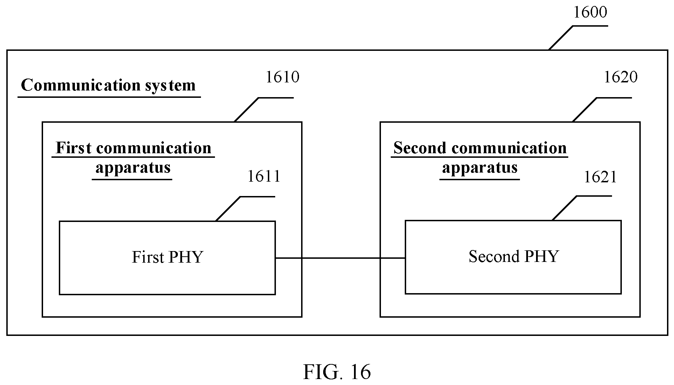

In addition, an embodiment of this application further provides a communication system 1600. As shown in FIG. 16, the communication system 1600 may include a first communication apparatus 1610 and a second communication apparatus 1620. The first communication apparatus includes a first PHY 1611, and the second communication apparatus includes a second PHY 1621. The first PHY 1611 is configured to perform the method 100 shown in FIG. 4 or FIG. 9. The second PHY 1621 is configured to perform the method 200 shown in FIG. 9.

In addition, an embodiment of this application further provides a storage medium. The storage medium stores program code or instructions. When the program code or the instructions are run on a processor, the processor is enabled to perform the method in any one of the implementations in the foregoing embodiments.

In addition, an embodiment of this application further provides a program product. When the program product runs on a processor, the processor is enabled to perform the method in any one of the implementations of the method 100 or the method 200.

It should be understood that "determining B based on A" mentioned in embodiments of this application does not mean that B is determined only based on A, and B may alternatively be determined based on A and/or other information.

It should be understood that a network architecture and a service scenario described in embodiments of this application are intended to describe the technical solutions of embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

Ordinal numbers such as "1", "2", "3", "first", "second", and "third" in this application are intended to distinguish between a plurality of objects, but are not intended to limit a sequence of the plurality of objects.

"A and/or B" mentioned in this application should be understood as including the following cases: Only A is included, only B is included, or both A and B are included.

It can be learned from the foregoing descriptions of the implementations that a person skilled in the art may clearly understand that some or all steps of the methods in embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communication device such as a router) to perform the methods described in embodiments or some parts of embodiments of this application.

Embodiments in this specification are all described in a progressive manner, for same or similar parts in embodiments, reference may be made to these embodiments, and each embodiment focuses on a difference from other embodiments. Especially, system embodiments and device embodiments are basically similar to method embodiments, and therefore are described briefly. For related parts, refer to partial descriptions in the method embodiments. The described device and system embodiments are merely examples. The modules described as separate parts may or may not be physically separate, and parts displayed as modules may or may not be physical modules, that is, may be located at one position, or may be distributed on a plurality of network units. Some or all of the modules may be selected based on actual requirements to achieve the objectives of the solutions of embodiments. A person of ordinary skill in the art may understand and implement embodiments without creative efforts.

The foregoing describes only example implementations of this application, and is not intended to limit the protection scope of this application. It should be noted that a person of ordinary skill in the art may make several improvements and refinements without departing from this application, and these improvements and refinements shall fall within the protection scope of this application.

## Claims

1. An encoding method, applied to a first physical layer PHY, wherein the method comprises:
obtaining a training frame, wherein the training frame comprises a plurality of subframes; and
performing code block encoding on a first subframe in the plurality of subframes to obtain a first code block set, wherein the first code block set comprises a first control code block, and the first control code block is used to determine a boundary code block between the first code block set and an adjacent code block set.

2. The method according to claim 1, wherein a second subframe in the plurality of subframes comprises an information field, and the information field comprises configuration information used for a link between the first PHY and a second PHY.

3. The method according to claim 2, wherein the method further comprises:
performing code block encoding on the second subframe to obtain a second code block set, wherein the second code block set comprises a second control code block.

4. The method according to claim 3, wherein a pre-encoding value of the first control code block is the same as a pre-encoding value of the second control code block.

5. The method according to claim 3, wherein a pre-encoding value of the first control code block is different from a pre-encoding value of the second control code block.

6. The method according to claim 3, wherein a quantity of first control code blocks is different from a quantity of second control code blocks; or
a position of the first control code block in the first code block set is different from a position of the second control code block in the second code block set.

7. The method according to claim 2, wherein the method further comprises:
performing code block encoding on the second subframe to obtain a second code block set, wherein the second code block set comprises a plurality of data code blocks.

8. The method according to any one of claims 1 to 7, wherein the first control code block is a start code block or an end code block of the first code block set, and the first control code block is the boundary code block.

9. The method according to any one of claims 1 to 7, wherein the first control code block is an intermediate code block of the first code block set, and the boundary code block is determined based on the position of the first control code block in the first code block set.

10. The method according to any one of claims 1 to 9, wherein the first code block set further comprises a third control code block, the third control code block indicates a position of the first code block set in a plurality of code block sets, and the plurality of code block sets are obtained by performing code block encoding on the training frame.

11. The method according to any one of claims 1 to 10, wherein the method further comprises:
sending the first code block set to the second PHY.

12. The method according to any one of claims 1 to 11, wherein performing code block encoding on the first subframe in the plurality of subframes to obtain the first code block set comprises:
encoding the first subframe in an 8B/10B manner to obtain the first code block set.

13. The method according to any one of claims 1 to 12, wherein the training frame is a physical medium attachment PMA training frame.

14. A decoding method, applied to a second physical layer PHY, wherein the method comprises:
obtaining a training sequence, wherein the training sequence comprises a first code block set, and the first code block set comprises a first control code block;
determining a first boundary code block between the first code block set and an adjacent code block set based on the first control code block; and
determining a second boundary between a first subframe and an adjacent subframe based on the first boundary code block.

15. The method according to claim 14, wherein the method further comprises:
determining a training frame, wherein the training frame comprises the first subframe.

16. The method according to claim 15, wherein the training sequence further comprises a second code block set, the second code block set is obtained by performing code block encoding on a second subframe, the second subframe comprises an information field, and the information field comprises configuration information used for a link between a first PHY and the second PHY.

17. The method according to claim 16, wherein the second code block set comprises a second control code block, and the method further comprises:
determining a third boundary code block between the second code block set and an adjacent code block set based on the second control code block; and
determining a fourth boundary between the second subframe and an adjacent subframe based on the third boundary code block.

18. The method according to claim 16, wherein the second code block set comprises a plurality of data code blocks, and the method further comprises:
determining a fourth boundary between the second subframe and an adjacent subframe based on a data code block that is in the second code block set and that corresponds to an occurrence position of the first control code block in the first code block set.

19. The method according to claim 17 or 18, wherein determining the training frame comprises:
decoding the training sequence to obtain a training bit stream; and
determining the training frame in the training bit stream based on the second boundary and the fourth boundary.

20. The method according to any one of claims 15 to 19, wherein the first code block set further comprises a third control code block, the third control code block indicates a position, in a plurality of code block sets, of the first code block set comprising the third control code block, the plurality of code block sets are obtained by performing code block encoding on the training frame, and determining the training frame comprises:
decoding the training sequence to obtain a training bit stream; and
determining a boundary of the training frame in the training bit stream based on the third control code block and the second boundary.

21. The method according to any one of claims 14 to 20, wherein determining the second boundary between the first subframe and the adjacent subframe based on the first boundary code block comprises:
decoding the training sequence based on the first boundary code block to obtain a training bit stream, wherein the training bit stream comprises the first subframe; and
determining the second boundary in the training bit stream based on indication information, wherein the indication information indicates a position of the first boundary code block in a corresponding code block set.

22. The method according to any one of claims 14 to 21, wherein the decoding is implemented in an 8B/10B manner.

23. A PHY chip, comprising a processor and an interface circuit, wherein
the interface circuit is configured to receive instructions and transmit the instructions to the processor;
the processor is configured to obtain a training frame, wherein the training frame comprises a plurality of subframes; and
the processor is further configured to perform code block encoding on a first subframe in the plurality of subframes to obtain a first code block set, wherein the first code block set comprises a first control code block, and the first control code block is used to determine a boundary code block between the first code block set and an adjacent code block set.

24. The PHY chip according to claim 23, wherein a second subframe in the plurality of subframes comprises an information field, and the information field comprises configuration information used for a link between the PHY chip and a peer PHY chip.

25. The PHY chip according to claim 24, wherein
the processor is further configured to perform code block encoding on the second subframe to obtain a second code block set, wherein the second code block set comprises a second control code block.

26. The PHY chip according to claim 25, wherein
a pre-encoding value of the first control code block is the same as a pre-encoding value of the second control code block;
a pre-encoding value of the first control code block is different from a pre-encoding value of the second control code block;
a quantity of first control code blocks is different from a quantity of second control code blocks; or
a position of the first control code block in the first code block set is different from a position of the second control code block in the second code block set.

27. The PHY chip according to claim 24, wherein
the processor is further configured to perform code block encoding on the second subframe to obtain a second code block set, wherein the second code block set comprises a plurality of data code blocks.

28. The PHY chip according to any one of claims 23 to 27, wherein
the first control code block is a start code block or an end code block of the first code block set, and the first control code block is the boundary code block; or
the first control code block is an intermediate code block of the first code block set, and the boundary code block is determined based on the position of the first control code block in the first code block set.

29. The PHY chip according to any one of claims 23 to 28, wherein the first code block set further comprises a third control code block, the third control code block indicates a position of the first code block set in a plurality of code block sets, and the plurality of code block sets are obtained by performing code block encoding on the training frame.

30. The PHY chip according to any one of claims 23 to 29, wherein
the interface circuit is further configured to send the first code block set to the peer PHY chip.

31. A PHY chip, comprising a processor and an interface circuit, wherein
the interface circuit is configured to receive instructions and transmit the instructions to the processor;
the processor is configured to obtain a training sequence, wherein the training sequence comprises a first code block set, and the first code block set comprises a first control code block;
the processor is further configured to determine a first boundary code block between the first code block set and an adjacent code block set based on the first control code block; and
the processor is further configured to determine a second boundary between a first subframe and an adjacent subframe based on the first boundary code block.

32. The PHY chip according to claim 31, wherein
the processor is further configured to determine a training frame, wherein the training frame comprises the first subframe.

33. The PHY chip according to claim 32, wherein the training sequence further comprises a second code block set, the second code block set is obtained by performing code block encoding on a second subframe, the second subframe comprises an information field, and the information field comprises configuration information used for a link between a peer PHY chip and the PHY.

34. The PHY chip according to claim 33, wherein the second code block set comprises a second control code block;
the processor is further configured to determine a third boundary code block between the second code block set and an adjacent code block set based on the second control code block; and
the processor is further configured to determine a fourth boundary between the second subframe and an adjacent subframe based on the third boundary code block.

35. The PHY chip according to claim 33, wherein the second code block set comprises a plurality of data code blocks; and
the processor is further configured to determine a fourth boundary between the second subframe and an adjacent subframe based on a data code block that is in the second code block set and that corresponds to an occurrence position of the first control code block in the first code block set.

36. The PHY chip according to claim 34 or 35, wherein the processor is specifically configured to:
decode the training sequence to obtain a training bit stream; and
determine the training frame in the training bit stream based on the second boundary and the fourth boundary.

37. The PHY chip according to any one of claims 32 to 36, wherein the first code block set further comprises a third control code block, the third control code block indicates a position, in a plurality of code block sets, of the first code block set comprising the third control code block, the plurality of code block sets are obtained by performing code block encoding on the training frame, and the processor is specifically configured to:
decode the training sequence to obtain a training bit stream; and
determine a boundary of the training frame in the training bit stream based on the third control code block and the second boundary.

38. The PHY chip according to any one of claims 31 to 37, wherein the processor is specifically configured to:
decode the training sequence based on the first boundary code block to obtain a training bit stream, wherein the training bit stream comprises the first subframe; and
determine the second boundary in the training bit stream based on indication information, wherein the indication information indicates a position of the first boundary code block in a corresponding code block set.

39. A communication apparatus, wherein the communication apparatus comprises a memory and a processor;
the memory is configured to store instructions; and
the processor is configured to execute the instructions in the memory, to perform the method according to any one of claims 1 to 22.

40. A communication system, comprising a first communication apparatus and a second communication apparatus, wherein the first communication apparatus comprises a first PHY, and the second communication apparatus comprises a second PHY;
the first PHY is configured to perform the method according to any one of claims 1 to 13; and
the second PHY is configured to perform the method according to any one of claims 14 to 22.

41. A storage medium, wherein the storage medium comprises instructions, and when the instructions are run on a processor, the processor is enabled to perform the method according to any one of claims 1 to 22.

42. A program product, wherein the program product comprises a program, and when the program is run on a processor, the method according to any one of claims 1 to 22 is performed.
